(19) Europäisches Patentamt
European Patent Office
Office européen des brevets

(11) EP 0 735 091 B1

(12) EUROPEAN PATENT SPECIFICATION

(45) Date of publication and mention of the grant of the patent:
**22.12.1999 Bulletin 1999/51**

(51) Int Cl.[6]: **C08L 23/08**, C08L 23/16, C08L 23/26, B32B 27/32

(21) Application number: **96302005.2**

(22) Date of filing: **22.03.1996**

# (54) Thermoplastic elastomer composition excellent in fusion bondability with an olefinic rubber, and bonded article

Thermoplastische Elastomermassen mit exzellenter Schmelzbindung an Olefinkautschuk und Verbundgegenstand

Elastomère thermoplastique avec capacité d'attache excellente avec un caoutchouc oléfinique et article combiné

(84) Designated Contracting States:
**DE FR GB**

(30) Priority: **31.03.1995 JP 9754295**

(43) Date of publication of application:
**02.10.1996 Bulletin 1996/40**

(73) Proprietor: **JAPAN SYNTHETIC RUBBER CO., LTD.**
**Tokyo 104 (JP)**

(72) Inventors:
- **Nakashini, Hideo**
  **Suzuka-shi (JP)**
- **Mizuno, Yoshihisa**
  **Yokkaichi-shi (JP)**

(74) Representative: **Lamb, Martin John Carstairs**
**MARKS & CLERK,**
**57-60 Lincoln's Inn Fields**
**London WC2A 3LS (GB)**

(56) References cited:
**EP-A- 0 426 853**

- **PATENT ABSTRACTS OF JAPAN, unexamined applications, C field, vol. 9, no. 88, April 17, 1985 THE PATENT OFFICE JAPANESE GOVERNMENT page 140 C 276; & JP-A-59 221 346 (MITSUI SEKIYU KAGAKU KOGYO KK)**
- **PATENT ABSTRACTS OF JAPAN, unexamined applications, C field, vol. 9, no. 88, April 17, 1985 THE PATENT OFFICE JAPANESE GOVERNMENT page 141 C 276; & JP-A-59 221 347 (MITSUI SEKIYU KAGAKU KOGYO KK)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 735 091 B1

Printed by Jouve, 75001 PARIS (FR)

## Description

BACKGROUND OF THE INVENTION

This invention relates to a partially cross-linked thermoplastic elastomer composition excellent in fusion bondability with an olefinic rubber, which comprises an ethylene/α-olefin copolymer rubber, an α-olefinic crystalline polymer and an α-olefinic non-crystalline polymer, and to its bonded article.

Olefinic thermoplastic elastomers are excellent in various properties such as heat resistance, ozone resistance, weather resistance and the like, and also have elastomeric properties similar to those of a vulcanized rubber and simultaneously have a moldability substantially equivalent to that of an olefinic thermoplastic resin such as polypropylene and the like. Therefore, by utilizing the above properties, the above thermoplastic elastomers have become used in the production of molded articles which require elastomeric properties such as bumper, side body molding, window-sealing gasket, door-sealing gasket, trunk-sealing gasket, roof side rail, emblem, interior skin material and the like of automobile and various gaskets and the like for construction.

Olefinic thermoplastic elastomers used in the production of a window-sealing gasket, door-sealing gasket and trunk-sealing gasket of automobile and gaskets for construction which particularly require elastomeric properties among the above-mentioned uses are obtained by increasing the content of the ethylene/α-olefin copolymer rubber constituent of an olefinic thermoplastic elastomer used in other uses.

However, the thermoplastic elastomers thus obtained are high in flexibility or stickiness, and hence, poor in flow property in the molten state. Therefore, it is difficult to produce gaskets for automobile and gaskets for construction which have complicated shapes directly from the olefinic thermoplastic elastomers by an injection molding method which is the most typical molding method.

On the other hand, the conventional process for producing these gaskets is complicated and requires a long working time as mentioned below, and hence, an improvement has been strongly desired from the viewpoints of labor-saving, productivity-enhancement and the like.

In the case of, for example, a conventional vulcanized rubber, a process is used which comprises profile-extrusion-molding an unvulcanized rubber to prepare the straight line portions of a gasket, vulcanizing the profile extrudates obtained, and then bonding the ends of the profile extrudates to each other through a curved joint part in a split-cavity mold and then vulcanization-bonding them in the mold. In this case, however, two vulcanization steps are required. In order to simplify such a process to shorten the working time, there have been taken into consideration both substitution of the olefinic thermoplastic elastomer, which does not require vulcanization, for the material of the joint part joining the ends of the vulcanized profile extrudates to each other, and substitution of the olefinic thermoplastic elastomer for even the material of the straight line portions of the profile extrudate; however, the former substitution is preferred to the latter in practice.

In the case of the substitution of the olefinic thermoplastic elastomer for the material of the joint part joining the ends of the profile extrudates to each other, a method has been adopted which comprises placing the profile extrudates in a split-cavity mold, injecting the olefinic thermoplastic elastomer into the joint portion to fusion-bond the ends to each other. However, in many cases, it is difficult to obtain such a bonding strength as to be suitable to practical use by fusion-bonding. For example, Japanese Patent Application Kokoku No. 61-53,933 (JP-B Sho 61(1986)-53,933) proposes a method in which when extrusion-molded articles of an olefinic thermoplastic elastomer are bonded to each other, the adherends are pre-heated to increase the bonding strength. Also, Japanese Patent Application Kokai No. 59-221,347 (JP-A Sho 59(1984)-221,347) proposes a method in which in bonding in the same manner as above, an olefinic thermoplastic elastomer having blended therewith a crystalline poly-1-butene is used to increase the bonding strength without pre-heating. In these methods, particularly when the adhered is an olefinic vulcanized rubber, no sufficient effect can be achieved.

Therefore, in both cases where the adherend is an olefinic vulcanized rubber and where the adherend is an olefinic thermoplastic elastomer, there has been strongly desired a development of an olefinic thermoplastic elastomer composition excellent in fusion bondability.

JP-A-59221346 discloses a partially cross linked resin composed of (a) a crystalline polyolefin composed mainly of α-olefin having three or more carbon atoms, (b) an amorphous ethylene-α-olefin copolymer and (c) a low-crystalline copolymer of propylene and an α-olefin having four or more carbon atoms.

SUMMARY OF THE INVENTION

An object of this invention is to provide a partially cross-linked thermoplastic elastomer composition excellent in fusion bondability which has a high bonding strength to both olefinic vulcanized rubber adherend and olefinic thermoplastic elastomer adherend.

A further object of this invention is to provide a bonded article of the above thermoplastic elastomer composition.

Other objects and advantages of this invention will become apparent from the following description.

According to this invention, there is firstly provided a thermoplastic elastomer composition obtainable by adding (D) a cross-linking agent to a mixture comprising (A) 20 to 80 parts by weight of an ethylene/α-olefin copolymer rubber, (B) 5 to 70 parts by weight of an α-olefinic crystalline polymer and(C) 1 to 50 parts by weight of an α-olefinic non-crystalline polymer having a melt viscosity at 190°C of not more than 50,000 cps [(A) + (B) = 100 parts by weight], and subjecting the resulting mixture to dynamic heat treatment at a temperature not lower than the melting point of the component (B) wherein the conditions for the dynamic heat-treatment are such that the temperature is 120 - 350°C and the time is 20 seconds to 20 minutes.

According to this invention, there is secondly provided a thermoplastic elastomer composition obtainable by adding (D) a cross-linking agent to a mixture comprising (A) 20 to 80 parts by weight of an ethylene/α-olefin copolymer rubber and (B) 5 to 70 parts by weight of an α-olefinic crystalline polymer, subjecting the resulting mixtures to dynamic heat-treatment at a temperature not lower than the melting point of the component (B), wherein the conditions for the dynamic heat-treatment are such that the temperature is 120 - 350°C and the time is 20 seconds to 20 minutes; further adding, to the resulting composition (C) 1 to 50 parts by weight of an α-olefinic thermoplastic elastomer having a melt viscosity at 190°C of not more than 50,000 cps [(A) + (B) +(C) = 100 parts by weight], and melt-kneading the resulting mixture.

This invention further provides a bonded article in which one molded article of an olefinic vulcanized or thermoplastic elastomer is bonded to one molded article formed from one of the above-mentioned thermoplastic elastomer compositions, or two molded articles of an olefinic vulcanized or thermoplastic elastomer are bonded to each other through one molded article formed from one of the above-mentioned thermoplastic elastomer compositions.

The thermoplastic elastomer composition of this invention exhibits excellent fusion bondability to adherends of both olefinic vulcanized rubber and olefinic thermoplastic elastomer. In addition, the thermoplastic elastomer composition of this invention has excellent elastomeric properties and thermoplastic properties and can be easily molded by a usual molding method for a thermoplastic resin such as injection molding, extrusion molding, blow molding, compression molding, vacuum molding, lamination molding, calender molding or the like. If necessary, the thermoplastic elastomer composition of this invention can easily be subjected to secondary processing such as foaming, stretching, adhering, printing, coating, plating or the like.

Accordingly, the thermoplastic elastomer composition of this invention can be widely utilized in the production of not only various composite molded articles having particularly a fusion-bonded part, but also general molded articles, and are useful to, for example, bumpers, side body moldings, window-sealing gaskets, door-sealing gaskets, trunk-sealing gaskets, roof side rails, emblems, interior and exterior trim skin materials and the like of automobile; sealing materials, interior and exterior trim skin materials and the like for aircraft and vessel; sealing materials, interior and exterior trim skin materials, water-proof sheet materials and the like for civil engineering and construction; sealing materials and the like for general machinery and apparatus; packings, housings and the like for light electrical parts; miscellaneous goods for daily use; sporting goods; and the like.

## DETAILED DESCRIPTION OF THE INVENTION

This invention is explained in detail below, whereby the object, constitution and effect of this invention will be made clear.

### (A) Ethylene/α-olefin copolymer rubber

The ethylene/α-olefin copolymer rubber (A) used in this invention [referred to hereinafter as the copolymer rubber (A)] is a rubbery copolymer comprising a major amount of an α-olefin having 3 or more carbon atoms and a minor amount of ethylene.

Said copolymer rubber (A) includes, for example, ethylene/α-olefin binary copolymers, ethylene/ α-olefin/non-conjugated diene ternary copolymers and the like. However, in the case of the above binary copolymers, the α-olefins can be used alone or in admixture of two or more. In the case of the above ternary copolymers, not only can the α-olefins be used alone or in admixture of two or more, but also the non-conjugated dienes can be used alone or in admixture of two or more.

The above α-olefins include, for example, those having 3 to 12 carbon atoms. Specifically included are propylene, 1-butene, 1-pentene, 3-methyl-1-butene, 1-hexene, 3-methyl-1-pentene, 4-methyl-1-pentene, 3-ethyl-1-pentene, 1-octene, 1-decene, 1-undecene and the like. Particularly preferable are propylene and 1-butene.

The above non-conjugated dienes include, for example, 1,4-pentadiene, 1,4-hexadiene, 1,5-hexadiene, 1,7-octadiene, 1,9-decadiene, 3,6-dimethyl-1,7-octadiene, 4,5-dimethyl-1,7-octadiene, 5-methyl-1,8-nonadiene, di-cyclopentadiene, 5-ethylidene-2-norbornene, 5-vinyl-2-norbornene, 2,5-norbornadiene and the like, and particularly preferable are dicyclopentadiene and 5-ethylidene-2-norbornene.

Preferable binary copolymers included in the copolymer rubber (A) are ethylene/propylene binary copolymer (EPM) and ethylene/1-butene binary copolymer (EBM). In the above EPM and EBM, the ethylene unit content is preferably 50 to 95 mole %, more preferably 60 to 90 mole %; the remaining unit is composed of propylene or 1-butene; the crystallinity as measured by an X-ray diffraction is preferably 20% or less, more preferably 15% or less; and the Mooney viscosity ($ML_{1+4}$100°C) (referred to hereinafter merely as the Mooney viscosity) is preferably 10 to 500, more preferably 20 to 400.

Preferable ternary copolymers included in the copolymer rubber (A) are ethylene/propylene/ dicyclopentadiene terpolymer, ethylene/propylene/ 5-ethylidene-2-norbornene terpolymer, ethylene/1-butene/ dicyclopentadiene terpolymer and ethylene/1-butene/ 5-ethylidene-2-norbornene terpolymer. In these terpolymers, the ethylene unit content is preferably 50 to 95 moles, more preferably 60 to 90 moles, per 100 moles of a total of the ethylene unit and the propylene or 1-butene unit; the dicyclopentadiene or 5-ethylidene-2-norbornene unit content is preferably 3 to 10 moles, more preferably 3 to 8 moles, per 100 moles of a total of the ethylene unit and the propylene or 1-butene unit; the crystallinity as measured by an X-ray diffraction is preferably 20% or less, more preferably 15% or less; and the Mooney viscosity is preferably 10 to 500, more preferably 30 to 400; and the iodine value is preferably 5 to 30, more preferably 7 to 20.

In the above binary and ternary copolymers, when the ethylene unit content is less than 50 mole %, there is a fear that the cross-linking efficiency may become low when an organic peroxide is used as the cross-linking agent (D) as mentioned hereinafter and the physical properties may become unsatisfactory. When the ethylene unit content is more than 95 mole % or when the crystallinity is more than 20%, there is a tendency that the flexibility of the copolymer is deteriorated. Therefore, these ethylene unit contents are not desirable.

When the Mooney viscosity is less than 10, there is a tendency that the bonding strength is lowered, and when it exceeds 500, the dispersion of the constituents (B) and (C) becomes insufficient when they are kneaded. Therefore, these Mooney viscosities are not satisfactory.

The copolymer rubber (A) can be produced by a conventional moderate or low pressure polymerization method, for example, a method which comprises polymerizing ethylene, an α-olefin and a non-conjugated diene in the presence of a Ziegler-Natta catalyst consisting of a transition metal compound and an organometallic compound, for example, a catalyst consisting of at least one solvent-soluble vanadium compound and at least one organoaluminum compound in a suitable solvent while, if necessary, feeding hydrogen as a molecular weight modifier. In this case, the polymerization can be carried out by a gas phase method (fluidized bed or stirring bed) or a liquid phase method (a slurry or solution method).

The above-mentioned solvent-soluble vanadium compound is preferably $VOCl_3$, $VCl_4$ or a reaction product of at least one member selected from $VOCl_3$ and $VCl_4$ with an alcohol. In this case, the alcohol includes, for example, methanol, ethanol, n-propanol, isopropanol, n-butanol, sec-butanol, t-butanol, n-hexanol, n-octanol, 2-ethylhexanol, n-decanol, n-dodecanol and the like. Among them, alcohols having 3 to 8 carbon atoms are preferred.

The above-mentioned organoaluminum compound includes, for example, triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride, an methylaluminoxane which is a reaction product of trimethylaluminum with water, and the like. These may be used alone or in admixture of two or more. Particularly preferably are ethylaluminum sesquichloride, butylaluminum sesquichloride, a mixture of ethylaluminum sesquichloride and triisobutylaluminum and a mixture of triisobutylaluminum and butylaluminum sesquichloride.

As the above-mentioned solvent, usually a hydrocarbon solvent is used. Preferable hydrocarbon solvents are n-pentane, n-hexane, n-heptane, n-octane, isooctane, cyclohexane and the like. These hydrocarbon solvents can be used alone or in admixture of two or more.

In this invention, as the copolymer rubber (A), there can be used, for example, a halogenated copolymer formed by substituting a halogen atom such as chlorine atom, bromine atom or the like for a part of the hydrogen atoms of the above-mentioned ethylene/α-olefin binary copolymer, ethylene/α-olefin/non-conjugated diene ternary polymer or the like; or a graft copolymer in which an unsaturated monomer such as vinyl chloride, vinyl acetate, (meth)acrylic acid or its derivative (for example, methyl (meth)acrylate, glycidyl (meth)acrylate, (meth)acrylamide or the like), maleic acid or its derivative (for example, maleic anhydride, maleimide, dimethyl maleate or the like), a conjugated diene (for example, butadiene, isoprene, chloroprene or the like) or the like is grafted on the above-mentioned ethylene/ α-olefin binary copolymer, ethylene/α-olefin/ non-conjugated diene ternary copolymer or halogenated copolymer.

In this invention, the copolymer rubbers (A) can be used alone or in admixture of two or more.

Moreover, the copolymer rubber (A) can be used in the form of an oil-extended rubber prepared by blending a suitable amount of a softening agent or a plasticizer with the copolymer rubber (A) for further improving the processibility, flexibility and the like.

The above-mentioned softening agent or plasticizer includes those which are usually used for rubbers, for

example, mineral oils such as aromatic oil, naphthenic oil, paraffinic oil and the like; vegetable oils such as coconut oil and the like; phthalic acid diesters; phosphoric acid triesters; esters of fatty acids with higher alcohols; and the like. The above-mentioned softening agents or plasticizers can be used alone or in admixture of two or more.

The proportion of the softening agent or plasticizer blended is preferably 250 parts by weight or less, more preferably 200 parts by weight or less, per 100 parts by weight of the copolymer rubber (A). In this case, when the proportion of the softening agent or plasticizer blended is more than 250 parts by weight, there is a fear that dispersion failure may occur when the constituents (B) and (C) are kneaded, so that said proportion is not desirable.

When the softening agent or plasticizer is blended, either method of previously blending the same with the constituent (A) or method of blending the same in the stage of preparing a thermoplastic elastomer composition may be used, or these methods may be used in combination.

<u>(B) α-Olefinic crystalline polymer</u>

The α-olefinic crystalline polymer (B) [referred to hereinafter as the crystalline polymer (B)] used in this invention refers to a resin which is composed of a homopolymer of an α-olefin having 3 or more carbon atoms or a copolymer comprising a major amount of said α-olefin and which has a crystallinity of 50% or more as measured by an X-ray diffraction.

In said crystalline polymer (B), the crystallinity has a close relation to density and, in general, a density can be substituted for the crystallinity. In the case of propylene, for example, the density of its α-type crystal (monoclinic system) is 0.936 g/$cm^3$, the density of its smetica type crystallite (pseudohexagonal system) is 0.886 g/$cm^3$ and the density of its non-crystalline (atactic) component is 0.850 g/$cm^3$, and in the case of poly-1-butene, the density of its isotactic crystal is 0.91 g/$cm^3$ and the density of its non-crystalline (atactic) component is 0.87 g/$cm^3$. Accordingly, these polymers must have a density of at least 0.89 g/$cm^3$, particularly preferably 0.90 to 0.94 g/$cm^3$. In this case, when the density is less than 0.89 g/$cm^3$, the heat resistance, strength and the like are lowered, so that such a density is not desirable.

The above-mentioned α-olefins having 3 or more carbon atoms include, for example, the α-olefins having 3 to 12 carbon atoms mentioned as to the copolymer rubber (A). Also, the above-mentioned copolymer comprising a major amount of an α-olefin includes, for example, copolymers of α-olefins having 3 or more carbon atoms with one another and copolymers of a major amount of an α-olefin having 3 or more carbon atoms with a minor amount of ethylene, and the like. The latter copolymer has preferably an ethylene unit content of not more than 40 mole %, more preferably not more than 20 mole %.

The above-mentioned copolymer comprising a major amount of an α-olefin having 3 or more carbon atoms may be in the form of a random copolymer or a block copolymer. However, in order to obtain a resin having the necessary crystallinity, in the case of a random copolymerization method, it is appropriate to control the total content of monomer units to be used in a minor amount to preferably not more than 15 mole %, more preferably not more than 10 mole %, and in the case of a block copolymerization method, it is appropriate to control the total content of monomer units to be used in a minor amount to preferably not more than 40 mole %, more preferably not more than 20 mole %.

The crystalline polymer (B) is preferably a polymer having the maximum peak temperature (Tm) of at least 100°C as measured by a differential scanning calorimetry (DSC). The melt flow rate (MFR) at a temperature of 230°C under a load of 2.16 Kg of the crystalline polymer (B) is preferably 0.1 to 100 g/10 min, more preferably 0.5 to 80 g/10 min.

In this case, when Tm is lower than 100°C, there is a tendency that the heat resistance, strength and the like of the fusion-bonded portion are lowered, and when MFR is less than 0.1 g/10 min, the kneader processibility, extruder-processibility and the like of the elastomer composition becomes insufficient and when it exceeds 100 g/10 min, there is a tendency that the strength of the fusion-bonded portion is lowered.

The melting point of the crystalline polymer (B) is varied depending upon the monomer composition; however, it is preferably at least 120°C, and particularly in the case of polypropylene, its melting point is preferably 140-170°C.

In this invention, particularly preferable crystalline polymers (B) are polypropylene and propylene/ ethylene copolymers having a crystallinity of not less than 50%, a density of not less than 0.89 g/$cm^3$, an ethylene content of not more than 20 mole %, and a Tm of at least 100°C.

Among the crystalline polymers (B), the random copolymers can be produced, for example, similarly to the above-mentioned copolymer rubber (A), and the block copolymer can be produced by, for example, a living polymerization method in which a Ziegler-Natta catalyst is used.

In this invention, the crystalline polymers (B) can be used alone or in admixture of two or more.

<u>(C) α-Olefinic non-crystalline polymer</u>

The α-olefinic non-crystalline polymer (C) having a melt viscosity at 190°C of not more than 50,000 cps [referred to hereinafter as the non-crystalline polymer (C)] is a non-crystalline homopolymer of an α-olefin having 3 or

more carbon atoms or a non-crystalline copolymer comprising a major amount of said α-olefin, both of which have a relatively low molecular weight so that the crystallinity as measured by an X-ray diffraction is less than 50%.

The melt viscosity of the non-crystalline polymer (C) is preferably 100 to 30,000 cps, more preferably 200 to 20,000 cps, and the crystallinity is preferably 30% or less, more preferably 20% or less. The crystallinity of the non-crystalline polymer (C) can also be replaced by its density, and the density is preferably 0.85 to 0.89 $g/cm^3$, more preferably 0.85 to 0.88 $g/cm^3$.

In this case, even when the melt viscosity of the non-crystalline polymer (C) exceeds 50,000 cps or the density is more than 0.89 $g/cm^3$, the bonding strength to an adherend is lowered, and either of them is undesirable.

Incidentally, the number average molecular weight (referred to hereinafter as Mn) of the non-crystalline polymer (C) is preferably 1,000 to 20,000, more preferably 1,500 to 15,000.

The above-mentioned olefin having 3 or more carbon atoms include, for example, the α-olefins having 3 to 12 carbon atoms mentioned as to the olefinic copolymer rubber (A).

The non-crystalline polymer (C) includes, for example, non-crystalline homopolymers such as atactic polypropylene, atactic poly-1-butene and the like; non-crystalline copolymers, for example, non-crystalline copolymers of a major amount of propylene with other olefins (for example, ethylene, 1-butene, 1-pentene, 1-hexene, 4-methyl-1-pentene, 1-octene, 1-decene and the like), non-crystalline copolymers of a major amount of 1-butene with other olefins (for example, ethylene, propylene, 1-pentene, 1-hexene, 4-methyl-1-pentene, 1-octene, 1-decene and the like), and the like; etc.

The above-mentioned non-crystalline copolymer may be in the form of a random copolymer or a block copolymer, and in the case of the block copolymer, it is necessary that the bonding style of units of at least α-olefin used in a major amount such as propylene, 1-butene or the like be an atactic configuration. When the non-crystalline copolymer is a copolymer of ethylene and an α-olefin having 3 or more carbon atoms, the content of this α-olefin is preferably not less than 50 mole %, more preferably 60 to 100 mole %.

In this invention, the non-crystalline polymer (C) is preferably an atactic polypropylene, a non-crystalline copolymer of a major amount of propylene and a major amount of ethylene or a non-crystalline copolymer of propylene and 1-butene.

Among the non-crystalline polymers (C), the atactic polypropylene can be obtained as a by-product in a process for the production of polypropylene as the crystalline polymer (B). The random copolymer can be produced, for example, in the same manner as in the production of the copolymer rubber (A) and the block copolymer can be produced, for example, by living polymerization using a Ziegler-Natta catalyst. Moreover, the atactic polypropylene and atactic poly-1-butene can also be produced by polymerization using a zirconocene compound-methylaluminoxane catalyst, or the like.

In this invention, the non-crystalline polymers (C) can be used alone or in admixture of two or more.

(D) Cross-linking agent

The cross-linking agent (D) used in this invention is a compound capable of cross-linking at least one (co) polymer in the composition by a dynamic heat treatment at a temperature not lower than the melting point of the crystalline polymer (B).

Said cross-linking agent includes organic peroxides, phenol type cross-linking agents, sulfur, sulfur compounds, p-quinone, derivatives of p-quinonedioxime, bismaleimide compounds, epoxy compounds, silane compounds, amino resins and the like, and in particular, organic peroxides and phenol type cross-linking agents are preferable.

The above organic peroxides include, for example, 1,3-bis(t-butylperoxyisopropyl)benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butylperoxy)hexane, 2,2'-bis(t-butylperoxy)-p-isopropylbenzene, dicumyl peroxide, di-t-butyl peroxide, t-butyl peroxide, p-menthane peroxide, 1,1-bis(t-butylperoxy)-3,3,5-trimethylcyclohexane, dilauroyl peroxide, diacetyl peroxide, t-butyl peroxybenzoate, 2,4-dichlorobenzoyl peroxide, p-chlorobenzoyl peroxide, benzoyl peroxide, di(t-butylperoxy) perbenzoate, n-butyl-4,4-bis(t-butylperoxy) valerate. t-butyl peroxyisopropyl carbonate, and the like. Among these organic peroxides, preferable are those having a relatively high decomposition temperature such as 1,3-bis(t-butylperoxyisopropyl) benzene, 2,5-dimethyl-2,5-bis(t-butylperoxy) hexyne-3, 2,5-dimethyl-2,5-bis(t-butylperoxy)hexane and the like, and particularly preferable is 2,5-dimethyl-2,5-bis(t-butylperoxy)hexyne-3 which has a high decomposition temperature.

The above-mentioned organic peroxides can be used alone or in admixture of two or more.

In this invention, a uniform and mild cross-linking reaction can be carried out by using the above organic peroxide along with a suitable cross-linking co-agent.

Said cross-linking co-agents include, for example, sulfur and sulfur compounds such as powdery sulfur, colloidal sulfur, precipitated sulfur, insoluble sulfur, surface-treated sulfur, dipentamethylenethiuram tetrasulfide and the like; oxime compounds such as p-quinoneoxime, p,p'-dibenzoylquinoneoxime and the like; polyfunctional monomers such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, trimethylolpropane tri(meth)acrylate, diallyl phthalate, tetraallyloxyethane, triallyl cyanurate, N,N'-m-phenylene bismaleimide, N,N'-toluylene bismaleimide, maleic anhydride, divinylbenzene, zinc di(meth)acrylate and the like; etc. Among these cross-linking co-agents, preferable are p,p'-dibenzoylquioneoxime, N,N'-m-phenylene bismaleimide and divinylbenzene. Incidentally, N,N'-m-phenylene bismaleimide can act alone as a cross-linking agent.

The above-mentioned cross-linking co-agents can be used alone or in admixture of two or more.

Moreover, the above-mentioned phenol type cross-linking agent is preferably a p-substituted phenol compound represented by the general formula:

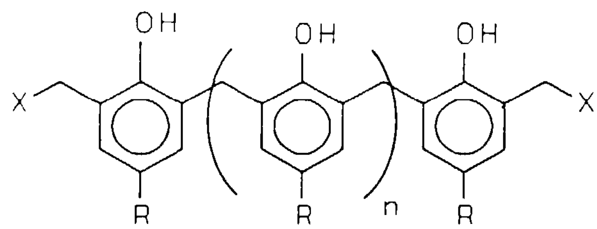

wherein n is an integer of 0 to 10, X represents a hydroxyl group, a halogenated alkyl group or a halogen atom, and R represents a saturated hydrocarbon group having 1 to 15 carbon atoms. This p-substituted phenol compound has heretofore been used as a cross-linking agent for rubber as stated in US Patent Nos. 3,287,440 and 3,709,840.

The above p-substituted phenol compound can be obtained by condensation reaction of a p-substituted phenol with an aldehyde (preferably formaldehyde) in the presence of an alkali catalyst.

Also, as the phenol type cross-linking agent, there can be used other phenol type cross-linking agents, for example, an o-substituted phenol-aldehyde condensate, an m-substituted phenol-aldehyde condensate, a brominated alkylphenol-aldehyde condensate and the like.

In this invention, the above-mentioned phenol type cross-linking agents can be used alone; however, in order to control the cross-linking rate, it can also be used along with a cross-linking promotor.

Such a cross-linking promotor includes, for example, metal halides such as stannous chloride, ferric chloride and the like; organic halides such as chlorinated polypropylene, brominated butyl rubber, chloroprene rubber and the like; etc. Also, a metal oxide such as zinc oxide or the like and a dispersing agent such as stearic acid or the like can be used together with the cross-linking promotor.

<u>Proportions of constituents of the thermoplastic elastomer composition</u>

The proportions of the above constituents of the thermoplastic elastomer composition of this invention are such that the proportion of the copolymer rubber (A) is 20 to 80 parts by weight, preferably 25 to 75 parts by weight; the proportion of the crystalline polymer (B) is 5 to 70 parts by weight, preferably 10 to 60 parts by weight; and the proportion of the non-crystalline polymer (C) is 1 to 50 parts by weight, preferably 3 to 40 parts by weight, provided that the total of the above three constituents is 100 parts by weight.

In this case, when the proportion of the copolymer rubber (A) blended is less than 20 parts by weight, or when the proportion of the crystalline polymer (B) exceeds 70 parts by weight, the flexibility of the thermoplastic elastomer composition is lowered, and when the proportion of the copolymer rubber (A) exceeds 80 parts by weight or when the proportion of the crystalline polymer (B) is less than 5 parts by weight, the heat resistance and strength of the fusion bonded portion are deteriorated and simultaneously the characteristics as a thermoplastic material are damaged. Therefore, these proportions are not desirable.

Furthermore, when the proportion of the non-crystalline polymer (C) blended is less than 1 part by weight, the fusion bondability which is the characteristic feature of this invention is damaged, and when the proportion exceeds 50 parts by weight, the strength of the fusion bonded portion is lowered, the tackiness of the thermoplastic elastomer composition becomes too high and the dispersion of the constituents (A) and (B) becomes insufficient when they are kneaded, so that these proportions are not desirable.

Moreover, among the cross-linking agents (D), the organic peroxide is blended preferably in a proportion of 0.05 to 1.5 parts by weight, more preferably 0.1 to 1.0 part by weight, per 100 parts by weight of a total of the copolymer rubber (A), the crystalline polymer (B) and the non-crystalline polymer (C), and the proportion of the above-mentioned cross-linking co-agent used is preferably 4 parts by weight or less, more preferably 0.2 to 3 parts by weight, per 100 parts by weight of a total of the constituents (A), (B) and (C). In this case, when the proportion of the organic peroxide is less than 0.05 part by weight, there is a tendency that the fusion bondability which is the characteristic feature of

this invention and the elastic recovery of the fusion bonded portion are deteriorated, and when the proportion of the organic peroxide exceeds 1.5 parts by weight, there is a tendency that processibilities such as extrusion-processibility and injection-moldability are deteriorated. When the proportion of the cross-linking co-agent blended exceeds 4 parts by weight, there is a fear that the cross-linking may become excessive and the fusion bondability which is the characteristic feature of this invention may be rather deteriorated.

The proportion of the phenol type cross-linking agent (D) blended is preferably 0.2 to 10 parts by weight, more preferably 0.5 to 5 parts by weight, per 100 parts by weight of the copolymer rubber (A). In this case, when the proportion of the phenol type cross-linking agent (C) blended is less than 0.2 part by weight, there is a tendency that the fusion bondability which is the characteristic feature of this invention and the elastic recovery of the fusion bonded portion are lowered, and when the proportion of the phenol type cross-linking agent (C) blended exceeds 10 parts by weight, there is a tendency that the extrusion-processibility and the injection-processibility of the thermoplastic elastomer composition are deteriorated.

<u>Preparation of thermoplastic elastomer composition</u>

The thermoplastic elastomer composition of this invention is prepared by the following methods:

In the first method, the cross-linking agent (D) is added to a mixture comprising the copolymer rubber (A), the crystalline polymer (B) and the non-crystalline polymer (C) in the above-mentioned respective amounts; if necessary, the cross-linking co-agent or the cross-linking promotor was added; and then the resulting mixture is subjected to dynamic heat-treatment at a temperature not lower than the melting point of the crystalline polymer (B).

In the second method, the cross-linking agent (D) is added to a mixture comprising the copolymer rubber (A) and the crystalline polymer (B) in the above-mentioned respective amounts; if necessary, the cross-linking co-agent or the cross-linking promotor is added; the resulting mixture is subjected to dynamic heat-treatment at a temperature not lower than the melting point of the crystalline polymer (B); the non-crystalline polymer (C) in the above-mentioned amount is, or if necessary, both the crystalline polymer (B) and the non-crystalline polymer (C) in the above-mentioned amounts are, added to the composition thus obtained; and the resulting mixture is melt-kneaded.

The dynamic heat-treatment in this invention means a heat-treatment under shearing of the mixture to be treated. When said dynamic heat-treatment is effected, the organic peroxide used as the cross-linking agent is decomposed to generate a radical, by the action of which, in the first method, the constituents (A), (B) and (C) are partially cross-linked, or in the second method, the constituents (A) and (B) are partially cross-linked, whereby a partially cross-linked thermoplastic elastomer composition is obtained. When a phenol type cross-linking agent is used as the cross-linking agent, a thermoplastic elastomer composition in which the copolymer rubber (A) has been selectively partially cross-linked is obtained. Incidentally, in the melt-kneading in the second method, a shearing force may or may not be applied.

The above dynamic heat-treatment can be carried out in a melt-kneading apparatus capable of applying a shearing force to the mixture to be treated.

As the above melt-kneading apparatus, there can be used a known apparatus, for example, a mixing roll of the open type, a Banbury mixer of the internal type, a single screw extruder, a twin screw extruder, a kneader or the like. Among these apparatuses, the single screw extruder and the twin screw extruder are preferred from the viewpoint of economy, treatment efficiency and the like. Also, the treatment in the above kneading apparatus can be carried out batchwise or continuously.

The conditions for the dynamic heat-treatment may be varied depending upon the melting point of the crystalline polymer (B), the kind of the cross-linking agent (D), the kneading system and the like; however, the treatment temperature is preferably 120-350°C, more preferably 160-290°C, and the treatment time is preferably 20 sec to 20 min, more preferably 30 sec to 15 min. The shearing force at the time of dynamic heat-treatment is preferably about 10 to $10^4$/sec, more preferably about $10^2$ to $10^3$/sec in terms of shear rate.

In the preparation of the thermoplastic elastomer composition of this invention, the copolymer rubber (A), the crystalline polymer (B) and the non-crystalline polymer (C) can be mixed and then fed, or two constituents, either (A) and (B); (A) and (C); or (B) and (C), can be previously mixed and the resulting mixture can be mixed with another constituent and then fed to. The method of mixing the constituents (A), (B) and (C) includes, for example, (a) a method by which the constituents (A), (B) and (C) are melt-mixed with each other; (b) a method by which solutions of constituents (A), (B) and (C) are mixed with each other and then the solvent is removed; (c) a method by which one or two of the constituents (A), (B) and (C) are fed to a polymerizing vessel, the other constituent(s) is prepared in the polymerizing vessel, and thereafter, the solvent is removed.

In this case, when the crystalline polymer (B) is previously melt-mixed with the non-crystalline polymer (C) and then the resulting molten mixture is used, the bonding strength which is the main object of this invention can be further enhanced, and hence, this embodiment is preferred.

When melt-mixing is carried out, a method can be adopted in which the cross-linking agent (D) is added

simultaneously with melt-mixing the copolymer rubber (A) with the crystalline polymer (B) or with melt-mixing the copolymer rubber (A), the crystalline polymer (B) and the non-crystalline polymer (C) together, to subject the mixture to dynamic heat-treatment.

The thermoplastic elastomer composition of this invention may, if necessary, have blended therewith a reinforcing material (for example, carbon black, silica or the like); a filler (for example, clay, talc, calcium carbonate or the like); and other additives such as a processing aid, a coloring agent, an antioxidant, an ultraviolet light absorber, an age resistor, a thermal stabilizer, a lubricant, a release agent, a flame retardant, a foaming agent, an antistatic agent, a fungicide and the like. The thermoplastic elastomer composition of this invention may further contain other polymers than the constituents (A), (B) and (C), for example, natural rubber, polyisoprene rubber, polybutadiene rubber, styrene-butadiene rubber, acrylonitrile-butadiene rubber, butyl rubber, acrylic rubber, high density polyethylene, medium density polyethylene, low density polyethylene, linear low density polyethylene and the like in appropriate amounts.

These additives can be blended in any step in the course of preparing the thermoplastic elastomer composition of this invention.

Preparation of bonded article

As a method of bonding a molded article of the thermoplastic elastomer composition of this invention to an olefinic vulcanized rubber molded article, the following method can be adopted:

A first method of bonding a molded article of the thermoplastic elastomer composition of this invention to an olefinic vulcanized rubber molded article by an injection molding which comprises placing the olefinic vulcanized rubber molded article in a split-cavity mold, injecting the thermoplastic elastomer composition of this invention into the joint portion or on the vulcanized rubber molded article to obtain a bonded article in which the end of the olefinic vulcanized rubber molded article is fusion-bonded to the end of the molded article of the thermoplastic elastomer composition or another bonded article (laminate) in which the surface of a molded article of the olefinic vulcanized rubber is fusion-bonded to the surface of a molded article of the thermoplastic elastomer composition.

A second method of bonding an olefinic vulcanized rubber molded article to a molded article of the thermoplastic elastomer composition of this invention by a hot press molding which comprises placing a molded article of the thermoplastic elastomer composition of this invention and the olefinic vulcanized rubber molded article in a split-cavity mold, and heating the split-cavity mold to obtain a bonded article (or a laminate) in which the molded article of the thermoplastic elastomer composition is fusion-bonded to the olefinic vulcanized rubber molded article. In this case, an olefinic unvulcanized rubber may be substituted for the olefinic vulcanized rubber and this olefinic unvulcanized rubber is vulcanized simultaneously with fusion-bonding the unvulcanized rubber molded article to the molded article of the thermoplastic elastomer composition.

A third method of bonding a molded article of the thermoplastic elastomer composition of this invention to a molded article of an olefinic vulcanized rubber by an extrusion molding which comprises extruding the thermoplastic elastomer composition into a sheet or film, placing the molten sheet or film on the olefinic vulcanized rubber molded article and press-bonding the resulting assembly by a roll or the like to obtain a bonded article (a laminate).

A fourth method of bonding a molded article of the thermoplastic elastomer composition of this invention to a molded article of an olefinic unvulcanized rubber by a multilayer extrusion molding which comprises extruding separately the thermoplastic elastomer composition and the olefinic unvulcanized rubber from the respective extruders to form their respective sheets or films so that every one of the sheets or films of the thermoplastic elastomer composition are inserted between a each pair of the sheets or films of the olefinic unvulcanized sheets or films, and fusion-bonding (laminating) the sheets or films to one another simultaneously with vulcanizing the unvulcanized rubber.

The method of obtaining a bonded article (including a laminate) is not critical; however, the thermoplastic elastomer composition of this invention is contacted in the heat-plasticized state with the joint surface of the olefinic vulcanized rubber molded article and the thermoplastic elastomer composition is cured by cooling in the state that the thermoplastic elastomer composition is in contact with the joint surface of the olefinic vulcanized rubber molded article or the resulting assembly is under pressure. By this process, the molded article of the thermoplastic elastomer composition of this invention is strongly bonded to the olefinic vulcanized rubber molded article which is an adherend.

The olefinic vulcanized rubber used here as the adherend is not critical; however, preferable are EPM, EPDM, EBM, EBDM and the like. It is possible to use an olefinic vulcanized rubber comprising, per 100 parts by weight of said rubber, 100 parts by weight or less of such a component as IIR, IR, BR, SBR, NBR, NR, CR, RB, ACM, fluororubber, epichlorohydrin rubber, urethane rubber, PP, PE, PB-1, EVA or the like.

The method of bonding a molded article of the thermoplastic elastomer composition of this invention to a molded article of the olefinic thermoplastic elastomer can be selected from various methods as mentioned above. The olefinic thermoplastic elastomer used as an adherend in this method is not critical. See, e. g., Japanese Patent Application Kokoku Nos. 53-21,021; 53-34,210; 54-2,662; 54-23,702; 55-18,448; 58-46,138; 56-15,742 and 02-52,648. Alternatively, the thermoplastic elastomer composition of this invention may be used.

When the adherend is an olefinic vulcanized rubber and the thermoplastic elastomer composition of this invention is fusion-bonded to the adherend by an injection molding, the effect of this invention is surprisingly increased.

DESCRIPTION OF THE PREFERRED EMBODIMENTS

Examples and Comparative Examples are shown below to explain this invention in more detail. However, this invention should not be construed to be limited to the Examples.

Constituents to be compounded

The constituents used in the Examples and the Comparative Examples were as follows:

Copolymer rubber (A)

EP-1: Ethylene/propylene/5-ethylidene-2-norbornene terpolymer (ethylene content: 79 mole %; propylene content: 21 mole %; Mooney viscosity: 320; Iodine value: 15) (EP98A, a trade name of Japan Synthetic Rubber Co., Ltd.). This was blended with a mineral oil softening agent (PW-380, a trade name of Idemitsu Petrochemical Co., Ltd.) in an amount of 43% by weight based on the total weight of EP-1 and the mineral oil softening agent and then used.

EP-2: Ethylene/propylene/dicyclopentadiene terpolymer (ethylene content: 77 mole %; propylene content: 23 mole %; Mooney viscosity: 85, Iodine value: 20) (EP75F, a trade name of Japan Synthetic Rubber Co., Ltd.)

Crystalline polymer (B)

PP-1: Propylene/ethylene random copolymer (density: 0.90 g/cm$^3$; MFR (temperature: 230°C; load: 2.16 Kg): 23 g/10 min) (FL25R, a trade name of Mitsubishi Chemical Co., Ltd.)

PP-2: Propylene/ethylene block copolymer (density: 0.90 g/cm$^3$; MFR (temperature: 230°C, load: 2.16 Kg): 30 g/10 min) (BC03GS, a trade name of Mitsubishi Chemical Co., Ltd.)

PP-3: Polypropylene (density: 0.91 g/cm$^3$; MFR (temperature: 230°C; load: 2.16 Kg): 5 g/10 min) (MA4, a trade name of Mitsubishi Chemical Co., Ltd.)

Non-crystalline polymer (C)

AP-1: Propylene/ethylene non-crystalline copolymer (propylene content: 87 mole %; melt-viscosity: 8,500 cps; density: 0.86 g/cm$^3$; Mn: 7,100) (UBETAC APAO UT 2385, a trade name of Ube Rexene Corporation)

AP-2: Propylene/1-butene non-crystalline copolymer (propylene content: 71 mole %; melt viscosity: 8,000 cps; density: 0.87 g/cm$^3$; Mn: 6,500) (UBETAC APAO UT 2780, a trade name of Ube Rexene Corporation)

AP-3: Atactic polypropylene (melt viscosity: 8,000 cps; density: 0.86 g/cm$^3$; Mn: 7,100) (UBETAC APAO UT 2180, a trade name of Ube Rexene Corporation)

AP-4 : Propylene/ethylene non-crystalline copolymer (propylene content: 87 mole %; melt viscosity: 400 cps; density: 0.86 g/cm$^3$, Mn: 1,900) (UBETAC APAO UT 2304, a trade name of Ube Rexene Corporation)

PA-5: Atactic polypropylene (melt viscosity: 10,000 cps; density: 0.88 g/cm$^3$) (E-4, a trade name of Mitsubishi Chemical Co., Ltd.)

Also, the following polymers were used as comparative polymers:

PB-1: Propylene/1-butene non-crystalline copolymer (melt viscosity: 6,000,000 cps; density: 0.89 g/cm$^3$) (TAFMER XR 110T, a trade name of Mitsui Petrochemical Industries, Ltd.)

PB-2: 1-Butene/$\alpha$-olefin non-crystalline copolymer (melt viscosity: 300,000 cps; density: 0.90 g/cm$^3$) (M8510, a trade name of Mitsui Petrochemical Industries, Ltd.)

IIR: Isobutylene/isoprene non-crystalline copolymer (degree of unsaturation: 0.8%, melt viscosity: 5,000,000 cps; density: 0.92 g/cm$^3$) (Butyl 065, a trade name of Japan Synthetic Rubber Co., Ltd.)

EVA: Ethylene/vinyl acetate non-crystalline copolymer (ethylene content: 93 mole %; melt viscosity: 23,000 cps; density: 0.94 g/cm$^3$; MFR (temperature: 190°C; load: 2.16 Kg): 400 g/10 min) (EVAFLEX410, a trade name of Mitsui DuPont Polychemical Co., Ltd.)

Cross-linking agent (D)

PH3: 2,5-Dimethyl-2,5-di-(t-butylperoxy)hexyne-3 (Perhexyne25B, a trade name of NOF CORP.)
PhR: Brominated alkylphenol-formaldehyde condensate (Tackirol250-I, a trade name of TAOKA CHEMICAL CO., LTD.)

(Other additives)

BM1: N,N'-m-phenylene bismaleimide (cross-linking co-agent) (VULNOC PM, a trade name of Ohuchi Shinko Chemical Industry Co., Ltd.)
AO: n-Octadecyl-3-(4'-hydroxy-3',5'-di-t-butylphenyl) propionate (antioxidant) (Irganox 1076, a trade name of Ciba-Geigy (Japan) Limited)
ZnO: Zinc flower (manufactured by SAKAI CHEMICAL INDUSTRY CO., LTD.)
STA: Stearic acid (manufactured by ASAHI DENKA KOGYO K. K.)

Adherend

An adherend comprising an olefinic vulcanized rubber [referred to hereinafter as Adherend (I)] was prepared by the following method:
To 100 parts by weight of an ethylene/ propylene/5-ethylidene-2-norbornene terpolymer (ethylene content: 72 mole %; propylene content: 28 mole %; Mooney viscosity: 92; iodine value: 15) (EP 103A, a trade name of Japan Synthetic Rubber Co., Ltd.) were added:

145 parts by weight of carbon black (Seast 116, a trade name of Tokai Denkyoku K. K.),
85 parts by weight of a paraffinic process oil (PW380, a trade name of Idemitsu Kosan K. K.),
5 parts by weight of active zinc flower (manufactured by SAKAI CHEMICAL INDUSTRY CO., LTD.),
1 part by weight of stearic acid (manufactured by ASAHI DENKA KOGYO K. K.),
1 part by weight of a processing aid (Hitanol 1501, a trade name of Hitachi Chemical Co., Ltd.),
2 parts by weight of a release agent (Struktol WB212, a trade name of Schill & Zeilacher), and
1 part by weight of polyethylene glycol (plasticizer),

and the resulting mixture was kneaded using a Banbury mixer at 50°C at 70 rpm for 2.5 hours. Subsequently, to the mixture were added:

10 parts by weight of a dehydrating agent (Vesta PP, a trade name of Inoue Sekkai Kogyo K. K.),
1 part by weight of a vulcanization accelerator M (manufactured by Ohuchi Shinko Chemical Industry Co., Ltd.),
1 part by weight of a vulcanization accelerator PX (manufactured by Ohuchi Shinko Chemical Industry Co., Ltd.),
0.5 part by weight of a vulcanization accelerator TT (manufactured by Ohuchi Shinko Chemical Industry Co., Ltd.),
1 part by weight of a vulcanization accelerator D (manufactured by Ohuchi Shinko Chemical Industry Co, Ltd.), and
2.2 parts by weight of sulfur,

and the resulting mixture was kneaded using an open roll at 50°C, and thereafter, vulcanized at 170°C for 10 minutes to prepare a vulcanized rubber sheet having a thickness of 2 mm.
This sheet was punched by a dumbbell cutter to prepare an adherend having a size of 60 × 50 mm [referred to hereinafter as Adherend (I)].
Adherend (II) was prepared by molding a composition consisting of 60 parts by weight of EP-1 having blended therewith 45% by weight of a mineral oil softening agent (PW-380, a trade name of Idemitsu Petrochemical Co., Ltd.) and 40 parts by weight of PP-1 by an injection machine (N-100, a trade name of THE JAPAN STEEL WORKS, LTD.) to prepare a square plate having a size of 120 × 100 × 2 mm, and punching this plate by a dumbbell cutter to prepare an adherend having a size of 60 × 50 mm.
Adherend (III) was prepared in the same manner as in the case of Adherend (II), except that a composition consisting of 54 parts by weight of EP-1 having blended therewith 39% by weight of a mineral oil softening agent (PW-380, a trade name of Idemitsu Petrochemical Co., Ltd.), 34 parts by weight of PP-1 and 12 parts by weight of AP-1 was substituted for the composition.

Evaluation test

The evaluation tests in the Examples and the Comparative Examples were conducted as follows:

(1) JIS A hardness

A molded article of a thermoplastic elastomer composition was subjected to measurement according to JIS K6301.

(2) Fusion-bonding test

(i) Tensile test

A test specimen prepared by punching so that the joint portion bonding the elastomer composition molded article to the adherend was positioned in the middle by use of a JIS No. 2 dumbbell cutter was drawn at a speed of 500 mm/min and the bonding strength and elongation at break of the joint portion bonding the thermoplastic elastomer composition molded article to the adherend were measured according to JIS K6301.

(ii) Folding test

The test specimen was folded at the joint portion bonding the elastomer composition molded article to the adherend as the starting point by an angle of 180°, and the debonded state at that time was observed visually and evaluated on the basis of the following criterion:

o: Not debonded
Δ: Partially debonded
×: Debonded and broken

Examples 1 to 10 and Comparative Examples 1 to 9

Elastomer compositions shown in Tables 1 and 2 were prepared by the following procedure:

Other constituents than the constituent (D) were charged into a pressure kneader having a volume of 10 liters (manufactured by Kabushiki Kaisha Moriyama Seisakusho) previously heated to 150°C and kneaded at 40 rpm for 10 minutes. The composition thus obtained was molded into a sheet by a 10-inch roll mill, and the sheet was then cut into cubic pellets by a cube-cutting pelletizer.

The constituent (D) was added to the composition in the form of cubic pellets and they were mixed for 30 minutes by a Henschel mixer and thereafter extruded under the conditions that the temperature was 230°C and the residence time was 2 minutes using a twin screw extruder [the ratio of the length L of the screw flight portion and the screw diameter D (L/D) was 33.5] (PCM-45, a trade name of Kabushiki Kaisha Ikegai)] while the mixture was subjected to dynamic heat-treatment, to obtain pellets of thermoplastic elastomer composition.

The pellets were subjected to injection molding by means of an injection machine (N-100, a trade name of THE JAPAN STEEL WORKS, LTD.) in which a sheet of the Adherend (I) (60 × 50 × 2 mm) were previously attached to the split-cavity mold to prepare a square plate (120 × 100 × 2 mm) in which the thermoplastic elastomer composition was fusion-bonded to the sheet of the Adherend (I).

The square plate thus obtained was subjected to the evaluation test. The evaluation results are shown in Table 1 (Examples 1 to 10) and in Table 2 (Comparative Examples 1 to 9).

It can be seen from the results that the thermoplastic elastomer composition of this invention is excellent in bonding strength to adherend and in elongation at break, and neither debonding nor breakage were caused by folding.

On the other hand, in Comparative Example 1, the bonding strength and elongation at break were inferior because the constituent (C) was not contained, and breakage was caused by folding.

In Comparative Example 2, the amount of the constituent (C) was large, and hence, the strength of the elastomer composition per se was small and material breakage was caused by drawing before debonding at the joint portion, and debonding was caused by folding.

In comparative Example 3, the amount of the constituent (A) was large, so that the processibility was remarkably inferior, the injection molding was impossible, and the composition was not able to be used in practice as a thermoplastic elastomer.

In Comparative Example 4, the amount of the constituent (A) was small and the amount of the constituent (B) was large, and hence, the thermoplastic elastomer composition was poor in flexibility, inferior in elongation at break and broken by folding.

In Comparative Example 6 and Comparative Example 7, the melt-viscosity at 190°C of the non-crystalline polymer comprising a major amount of propylene or butene-1 was high, and hence, the bonding strength and elongation at break were inferior, and debonding or breakage was caused by folding.

In Comparative Example 8 and Comparative Example 9, a non-crystalline polymer other than the constituent (C) of this invention was used, and hence, the bonding strength and elongation at break were inferior and breakage was caused by folding.

Table 1

| Item | | | Example 1 | 2 | 3 | 4 | 5 | 6 | 7 | 8 | 9 | 10 |
|---|---|---|---|---|---|---|---|---|---|---|---|---|
| Thermoplastic elastomer composition | Constituent (A) | Kind<br>part by wt. | EP-1<br>57 | EP-1<br>54 | EP-1<br>41 | EP-1<br>57 | EP-1<br>57 | EP-1<br>57 | EP-1<br>57 | EP-2<br>55 | EP-1<br>57 | EP-1<br>57 |
| | | Part by wt. of softening agent | 43 | 39 | 31 | 43 | 43 | 43 | 43 | 0 | 43 | 43 |
| | Constituent (B) | Kind<br>Part by wt. | PP-1<br>37 | PP-1<br>34 | PP-1<br>29 | PP-1<br>37 | PP-1<br>37 | PP-1<br>37 | PP-1<br>37 | PP-1<br>25 | PP-2<br>37 | PP-3<br>37 |
| | Constituent (C) | Kind<br>Part by wt. | AP-1<br>6 | AP-1<br>12 | AP-1<br>30 | AP-2<br>6 | AP-3<br>6 | AP-4<br>6 | AP-5<br>6 | AP-1<br>20 | AP-1<br>6 | AP-1<br>6 |
| | Constituent (D) | Kind<br>Part by wt. | PH3<br>0.4 | PH3<br>0.4 | PH3<br>0.4 | PH3<br>0.4 | PH3<br>0.4 | PH3<br>0.4 | PH3<br>0.4 | PH3<br>0.4 | PH3<br>0.4 | PH3<br>0.4 |
| | Other additives | Kind<br>Part by wt. | BM1<br>0.7 | BM1<br>0.7 | BM1<br>0.7 | BM1<br>0.7 | BM1<br>0.7 | BM1<br>0.7 | BM1<br>0.7 | BM1<br>0.7 | BM1<br>0.7 | BM1<br>0.7 |
| | | Kind<br>Part by wt. | AO<br>0.1 | AO<br>0.1 | AO<br>0.1 | AO<br>0.1 | AO<br>0.1 | AO<br>0.1 | AO<br>0.1 | AO<br>0.1 | AO<br>0.1 | AO<br>0.1 |
| Kind of adherend | | | (I) | (I) | (I) | (I) | (I) | (I) | (I) | (I) | (I) | (I) |
| Evaluation results | Surface hardness | | 76 | 74 | 71 | 75 | 77 | 75 | 78 | 78 | 78 | 78 |
| | Fusion bonding test<br>(1) Tensile test<br>Bonding strength ($Kgf/cm^2$) | | 28 | 30 | 34 | 29 | 30 | 29 | 27 | 29 | 29 | 30 |
| | Elongation at break (%) | | 105 | 215 | 290 | 120 | 130 | 110 | 100 | 90 | 110 | 130 |
| | (2) Folding test | | ○ | ○ | ○ | ○ | ○ | ○ | ○ | ○ | ○ | ○ |

Table 2

| Item | | | Example 1 | Example 2 | Example 3 | Example 4 | Example 5 | Example 6 | Example 7 | Example 8 | Example 9 |
|---|---|---|---|---|---|---|---|---|---|---|---|
| Thermoplastic elastomer composition | Constituent (A) | Kind | EP-1 | EP-1 | EP-1 | EP-1 | EP-1 | EP-1 | EP-1 | EP-1 | EP-1 |
| | | part by wt. | 60 | 30 | 90 | 10 | 54 | 54 | 54 | 54 | 54 |
| | | Part by wt. of softening agent | 45 | 23 | 68 | 8 | 39 | 39 | 39 | 39 | 39 |
| | Constituent (B) | Kind | PP-1 | PP-1 | PP-1 | PP-1 | PP-1 | PP-1 | PP-1 | PP-1 | PP-1 |
| | | Part by wt. | 40 | 10 | 5 | 80 | 34 | 34 | 34 | 34 | 34 |
| | Constituent (C) | Kind | - | AP-1 | AP-1 | AP-1 | AP-1 | PB-1 | PB-2 | IIR | EVA |
| | | Part by wt. | - | 60 | 5 | 10 | 12 | 12 | 12 | 12 | 12 |
| | Constituent (D) | Kind | PH3 | PH3 | PH3 | PH3 | - | PH3 | PH3 | PH3 | PH3 |
| | | Part by wt. | 0.4 | 0.4 | 0.4 | 0.4 | - | 0.4 | 0.4 | 0.4 | 0.4 |
| | Other additives | Kind | BM1 | BM1 | BM1 | BM1 | - | BM1 | BM1 | BM1 | BM1 |
| | | Part by wt. | 0.7 | 0.7 | 0.7 | 0.7 | - | 0.7 | 0.7 | 0.7 | 0.7 |
| | | Kind | AO | AO | AO | AO | AO | AO | AO | AO | AO |
| | | Part by wt. | 0.1 | 0.1 | 0.1 | 0.1 | 0.1 | 0.1 | 0.1 | 0.1 | 0.1 |
| Kind of adherend | | | (I) | (I) | (I) | (I) | (I) | (I) | (I) | (I) | (I) |
| Evaluation results | Surface hardness | | 77 | 69 | Impossible to mold | 100 | 73 | 82 | 82 | 70 | 72 |
| | Fusion bonding test (1) Tensile test Bonding strength (Kgf/cm$^2$) | | 19 | 20 (*) | | 40 | 22 | 24 | 23 | 22 | 18 |
| | Elongation at break (%) | | 45 | 60 | | 45 | 70 | 70 | 55 | 40 | 35 |
| | (2) Folding test | | × | Δ | | × | Δ | Δ | × | × | × |

Note: (*) Material failure was caused before debonding

Examples 11 to 13 and Comparative Examples 10 to 12

In the same manner as in Examples 1 to 10, except that the constituents shown in Table 3 were used, thermoplastic elastomer compositions were prepared and subjected to the evaluation tests. The evaluation results obtained are shown in Table 3.

From the results, it can be seen that Comparative Examples 10 to 12 in which the constituent (C) of this invention was not used are inferior in bonding strength and elongation at break as compared with Examples 11 to 13, respectively, which are approximately the same in hardness, and breakage was caused by folding in Comparative Examples 10 to 12.

Table 3

| Item | | | Example 11 | Example 12 | Example 13 | Comp. Example 10 | Comp. Example 11 | Comp. Example 12 |
|---|---|---|---|---|---|---|---|---|
| Thermoplastic elastomer composition | Constituent (A) | Kind part by wt. | EP-1 60 | EP-1 34 | EP-1 57 | EP-1 77 | EP-1 41 | EP-1 60 |
| | | Part by wt. of softening agent | 45 | 26 | 43 | 56 | 31 | 45 |
| | Constituent (B) | Kind Part by wt. | PP-1 20 | PP-1 54 | PP-1 37 | PP-1 23 | PP-1 59 | PP-1 40 |
| | Constituent (C) | Kind Part by wt. | AP-1 20 | AP-1 12 | AP-1 6 | - - | - - | - - |
| | Constituent (D) | Kind Part by wt. | PH3 0.4 | PH3 0.4 | PhR 2 | PH3 0.4 | PH3 0.4 | PhR 2 |
| | Other additives | Kind Part by wt. | BM1 0.7 | BM1 0.7 | ZnO 1.8 | BM1 0.7 | BM1 0.7 | ZnO 1.8 |
| | | Kind Part by wt. | AO 0.1 | AO 0.1 | STA 0.3 | AO 0.1 | AO 0.1 | STA 0.3 |
| Kind of adherend | | | (I) | (I) | (I) | (I) | (I) | (I) |
| Evaluation results | Surface hardness | | 60 | 96 | 78 | 60 | 96 | 79 |
| | Fusion bonding test (1) Tensile test Bonding strength ($Kgf/cm^2$) | | 22 | 43 | 26 | 12 | 31 | 17 |
| | Elongation at break (%) | | 200 | 150 | 100 | 60 | 25 | 35 |
| | (2) Folding test | | ○ | ○ | ○ | × | × | × |

Examples 14 and 15 and Comparative Example 13

In the same manner as in Examples 1 to 10, except that the constituents shown in Table 4 and Adherend (II)

or (III) were used, a thermoplastic elastomer composition was prepared and subjected to evaluation tests. The evaluation results obtained are shown in Table 4.

From the results, it can be seen that the thermoplastic elastomer composition of this invention had an excellent bonding strength even to the Adherends (II) and (III), and neither debonding nor breakage were caused by folding. In particular, Example 15 shows the case where both the thermoplastic elastomer composition and the Adherend (III) were prepared and formed, respectively, from the thermoplastic elastomer composition of this invention, and proves that the bonding strength and elongation at break are further enhanced.

On the other hand, in Comparative Example 13 free from the constituent (C) of this invention, the bonding strength and elongation at break were inferior.

Table 4

| Item | | | Example 14 | Example 15 | Comp. Example 13 |
|---|---|---|---|---|---|
| Thermoplastic elastomer composition | Constituent (A) | Kind<br>part by wt. | EP-1<br>54 | EP-1<br>54 | EP-1<br>60 |
| | | Part by wt. of softening agent | 39 | 39 | 45 |
| | Constituent (B) | Kind<br>Part by wt. | PP-1<br>34 | PP-1<br>34 | PP-1<br>40 |
| | Constituent (C) | Kind<br>Part by wt. | AP-1<br>12 | AP-1<br>12 | -<br>- |
| | Constituent (D) | Kind<br>Part by wt. | PH3<br>0.4 | PH3<br>0.4 | PH3<br>0.4 |
| | Other additives | Kind<br>Part by wt. | BM1<br>0.7 | BM1<br>0.7 | BM1<br>0.7 |
| | | Kind<br>Part by wt. | AO<br>0.1 | AO<br>0.1 | AO<br>0.1 |
| Kind of adherend | | | (II) | (III) | (II) |
| Evaluation results | Surface hardness | | 74 | 74 | 77 |
| | Fusion bonding test | | | | |
| | (1) Tensile test<br>Bonding strength (Kgf/cm$^2$) | | 42 | 48 | 35 |
| | Elongation at break (%) | | 380 | 430 | 290 |
| | (2) Folding test | | ○ | ○ | ○ |

Examples 16 and 17

The constituents shown in Table 5 were used and the constituent (D) was added to a mixture of the constituents other than the constituents (C) and (D), after which the resulting mixture was extruded using the same twin screw extruder as in Examples 1 to 10 under the conditions that the temperature was 230°C and the residence time was 2 minutes while subjected to dynamic heat-treatment to obtain pellets of a thermoplastic elastomer composition.

Subsequently, the constituent (C) was further added to the pellet-shaped composition and the resulting mixture

was charged into a pressure kneader having a volume of 10 liters manufactured by Kabushiki Kaisha Moriyama Seisakusho which had previously been heated to 150°C, and kneaded at 40 rpm for 10 minutes. The composition obtained was formed into a sheet by means of a 10-inch roll and then cut to cubic pellets by a cube-cutting pelletizer.

The cubic pellets were injection molded by an injection machine (N-100, a trade name of THE JAPAN STEEL WORKS, LTD.) in which a sheet of the Adherend (I) (60 × 50 × 2 mm) were previously attached to the split-cavity mold, to prepare a square plate (120 × 100 × 2 mm) in which the thermoplastic elastomer composition was fusion-bonded to the sheet of the Adherend (I).

The square plate was subjected to evaluation test in the same manner as in Examples 1 to 10 to obtain the results shown in Table 5.

From the results, it can be seen that the elastomer composition of this invention which was first subjected to dynamic heat-treatment and then blended with the constituent (C) was also excellent in bonding strength and elongation at break, and neither debonding nor breakage were caused by folding.

Table 5

| Item | | | Example | |
|---|---|---|---|---|
| | | | 16 | 17 |
| Thermoplastic elastomer composition | Constituent (A) | Kind<br>part by wt. | EP-1<br>53 | EP-1<br>46 |
| | | Part by wt. of softening agent | 39 | 35 |
| | Constituent (B) | Kind<br>Part by wt. | PP-1<br>35 | PP-1<br>31 |
| | Constituent (C) | Kind<br>Part by wt. | AP-1<br>12 | AP-1<br>23 |
| | Constituent (D) | Kind<br>Part by wt. | PH3<br>0.36 | PH3<br>0.36 |
| | Other additives | Kind<br>Part by wt. | BM1<br>0.64 | BM1<br>0.64 |
| | | Kind<br>Part by wt. | AO<br>0.09 | AO<br>0.09 |
| Kind of adherend | | | (I) | (I) |
| Evaluation results | Surface hardness | | 75 | 72 |
| | Fusion bonding test | | | |
| | (1) Tensile test Bonding strength (Kgf/cm$^2$) | | 27 | 31 |
| | Elongation at break (%) | | 110 | 230 |
| | (2) Folding test | | ○ | ○ |

Examples 18 to 20

In Example 18, in the same manner as in Example 11, except that the constituents (B) and (C) were previously melt-mixed at a weight ratio of 1:1 by a twin screw extruder at 220°C and the mixture thus obtained was used to prepare a composition so that the proportions became the same as in Example 11 [the constituent (A) containing a softening agent: 105 parts by weight, the mixture of the constituents (B) and (C): 40 parts by weight], the preparation of a thermoplastic elastomer composition and the evaluation test were conducted. The evaluation results are shown in Table 6.

In Example 19, in the same manner as in Example 2, except that the molten mixture of the constituents (B) and (C) used in Example 18 was used so that the proportions became the same as in Example 2 [the constituent (A) containing a softening agent: 93 parts by weight, the mixture of the constituents (B) and (C): 24 parts by weight, the constituent (B): 22 parts by weight], the preparation of a thermoplastic elastomer composition and the evaluation test were conducted to obtain the results shown in Table 6.

In Example 20, the constituent (D) was added in the amount shown in Table 6 to a mixture comprising 92 parts by weight of the constituent (A) containing a softening agent, 23 parts by weight of the constituent (B) and the additives shown in Table 6 in the amounts shown in Table 6, and the resulting mixture was extruded using the same

extruder as in Example 1 to 10 while subjected to dynamic heat-treatment under the conditions that the temperature was 230°C and the residence time was 2 minutes to obtain pellets of a thermoplastic elastomer composition.

Subsequently, in the same manner as in Example 16, except that the pellet-shaped composition and the mixtures of the constituents (B) and (C) used in Examples 18 and 19 were used so that the proportions became the same as in Example 16 (the pellet-shaped composition: 116 parts by weight; the mixture of the constituents (B) and (C): 24 parts by weight), the preparation of a thermoplastic elastomer composition and the evaluation tests were conducted to obtain the results shown in Table 6.

From the results, it can be seen that the thermoplastic elastomer composition of this invention obtained by using a mixture obtained by previously melt-mixing the whole amount or a part of the constituents (B) and (C) is excellent in bonding strength and elongation at break and does not cause debonding and breakage when folded (comparison of Example 18 with Example 11, Example 19 with Example 2 and Example 20 with Example 16).

Table 6

| Item | | | Example | | |
|---|---|---|---|---|---|
| | | | 18 | 19 | 20 |
| Thermoplastic elastomer composition | Constituent (A) | Kind<br>part by wt. | EP-1<br>60 | EP-1<br>54 | EP-1<br>53 |
| | | Part by wt. of softening agent | 45 | 39 | 39 |
| | Constituent (B) | Kind<br>Part by wt. | PP-1<br>20 | PP-1<br>34 | PP-1<br>35 |
| | Constituent (C) | Kind<br>Part by wt. | AP-1<br>20 | AP-1<br>12 | AP-1<br>12 |
| | Constituent (D) | Kind<br>Part by wt. | PH3<br>0.4 | PH3<br>0.4 | PH3<br>0.36 |
| | Other additives | Kind<br>Part by wt. | BM1<br>0.7 | BM1<br>0.7 | BM1<br>0.64 |
| | | Kind<br>Part by wt. | AO<br>0.1 | AO<br>0.1 | AO<br>0.09 |
| Kind of adherend | | | (I) | (I) | (I) |
| Evaluation results | Surface hardness | | 60 | 74 | 75 |
| | Fusion bonding test | | | | |
| | (1) Tensile test Bonding strength (Kgf/cm$^2$) | | 31 | 36 | 32 |
| | Elongation at break (%) | | 340 | 280 | 190 |
| | (2) Folding test | | ○ | ○ | ○ |

Example 21

The pellets of the thermoplastic elastomer composition in Example 2 were injection-molded by an injection machine (N-100, a trade name of THE NIPPON STEEL WORKS, LTD.) in which the Adherend (I) (120 × 100 × 1 mm) was previously attached to a split-cavity mold to prepare a laminate (120 × 100 × 2 mm) in which the thermoplastic elastomer composition were fusion-bonded to the Adherend (I).

A test specimen prepared by punching this laminate in a width of 20 mm was applied to a tensile tester to measure at a speed of 50 mm/min the peeling strength of the bonded portion.

The peeling strength was calculated by the following equation:

$$\text{Peeling strength (kgf/cm)} \ \frac{\text{Average stress (kgf) in distance of 5 cm}}{\text{Width of test specimen (cm)}}$$

The evaluation results are shown in Table 7.

Comparative Example 14

In the same manner as in Example 21, except that the thermoplastic elastomer composition in Comparative Example 1 was substituted for the thermoplastic elastomer composition in Example 2, the preparation of a laminate and the evaluation test were conducted to obtain the results shown in Table 7.

From the results, it can be seen that the thermoplastic elastomer composition of this invention is excellent in bonding strength to the Adherend (I) comprising the olefinic vulcanized rubber.

Comparative Example 22

In the same manner as in Example 21, except that the Adherend (II) was substituted for the Adherend (I), the preparation of a laminate and evaluation test were conducted to obtain the results shown in Table 7.

Comparative Example 15

In the same manner as in Example 22, except that the thermoplastic elastomer composition in Comparative Example 1 was substituted for the thermoplastic elastomer composition in Example 2, the preparation of a laminate and evaluation text were conducted to obtain the results shown in Table 7.

From the results, it can be seen that the thermoplastic elastomer composition of this invention is excellent in bonding strength to the Adherend (II) comprising the olefinic unvulcanized rubber.

Table 7

| Item | | Example | Comp. Example | Example | Comp. Example |
|---|---|---|---|---|---|
| | | 21 | 14 | 22 | 15 |
| Kind of laminate | Kind of thermoplastic elastomer composition | Example 2 | Comp. Example 1 | Example 2 | Comp. Example 1 |
| | Kind of adherend | (I) | (I) | (II) | (II) |
| Evaluation results | Peeling strength (Kgf/cm) | 2.2 | 0.3 | >3.5 (Material failure) | 1.5 |

NOTE

Crystallinity

Using an X-ray diffraction measurement apparatus [manufactured by Rigaku Electric Co., Ltd. (Rigaku Denki)], crystallinity of a polymer was measured under the analysis condition using Cu-Kα (wavelength of 1.542 Å) and an output of 3 SKV-15mA.

**Claims**

1. A thermoplastic elastomer composition obtainable by adding (D) a cross-linking agent to a mixture comprising (A) 20 to 80 parts by weight of an ethylene/α-olefin copolymer rubber, (B) 5 to 70 parts by weight of an α-olefinic crystalline polymer and (C) 1 to 50 parts by weight of an α-olefinic non-crystalline polymer having a melt-viscosity of not more than 50,000 cps at 190°C, provided that the total of the constituents (A), (B) and (C) is 100 parts by weight, and subjecting the resulting mixture to dynamic heat-treatment at a temperature not lower than the melting point of the constituent (B) wherein the conditions for the dynamic heat-treatment are such that the temperature is 120 - 350°C and the time is 20 seconds to 20 minutes.

2. A thermoplastic elastomer composition obtainable by adding (D) a cross-linking agent to a mixture comprising (A) 20 to 80 parts by weight of an ethylene/α-olefin copolymer rubber and (B) 5 to 70 parts by weight of an /α-olefinic crystalline polymer, subjecting the resulting mixture to dynamic heat-treatment at a temperature not lower than the melting point of the constituent (B), wherein the conditions for the dynamic heat-treatment are such that the temperature is 120 - 350°C and the time is 20 seconds to 20 minutes; adding, to the resulting composition, (C) 1 to 50 parts by weight of an α-olefinic non-crystalline polymer having a melt viscosity at 190°C of not more than 50,000

cps, provided that the total of the constituents (A), (B) and (C) is 100 parts by weight, and then melt-kneading the resulting mixture.

3. The thermoplastic elastomer composition according to claim 1 or 2, wherein the ethylene/α-olefin copolymer rubber (A) is a rubbery polymer comprising ethylene and an α-olefin having 3 or more carbon atoms as the essential constituents.

4. The thermoplastic elastomer composition according to Claim 3, wherein the α-olefin has 3 to 12 carbon atoms.

5. The thermoplastic elastomer composition according to Claim 4, wherein the α-olefin having 3 to 12 carbon atoms is a member selected from the group consisting of propylene, 1-butene, 1-pentene, 3-methyl-1-butene, 1-hexene, 3-methyl-1-pentene, 4-methyl-1-pentene, 3-ethyl-1-pentene, 1-octene, 1-decene and 1-undecene.

6. The thermoplastic elastomer composition according to Claim 1 or 2, wherein the ethylene/α-olefin copolymer rubber (A) is selected from the group consisting of an ethylene/α-olefin binary copolymer and an ethylene/α-olefin/non-conjugated diene ternary copolymer.

7. The thermoplastic elastomer composition according to Claim 6, wherein the ethylene/α-olefin copolymer rubber (A) is an ethylene/a-olefin binary copolymer selected from the group consisting of ethylene/propylene binary copolymer and ethylene/1-butene binary copolymer, which has an ethylene unit content of 50 to 95 mole %, the balance being propylene unit or 1-butene unit, a crystallinity of 20% or less as measured by an X-ray diffraction and a Mooney viscosity ($ML_{1+4}$100°C) of 10 to 500.

8. The thermoplastic elastomer composition according to Claim 6, wherein the ethylene/α-olefin copolymer rubber (A) is an ethylene/a-olefin/non-conjugated diene ternary copolymer.

9. The thermoplastic elastomer composition according to Claim 8, wherein the non-conjugated diene of the ethylene/α-olefin/non-conjugated diene ternary copolymer is a member selected from the group consisting of 1,4-pentadiene, 1,4-hexadiene, 1,5-hexadiene, 1,7-octadiene, 1,9-decadiene, 3,6-dimethyl-1,7-octadiene, 4,5-dimethyl-1,7-octadiene, 5-methyl-1,8-nonadiene, dicyclopentadiene, 5-ethylidene-2-norbornene, 5-vinyl-2-norbornene and 2,5-norbornadiene.

10. The thermoplastic elastomer composition according to Claim 8, wherein the ethylene/α-olefin/non-conjugated diene ternary copolymer is a terpolymer selected from the group consisting of ethylene/propylene/ dicyclopentadiene terpolymer, ethylene/propylene/ 5-ethylidene-2-norbornene terpolymer, ethylene/1-butene/ dicyclopentadiene terpolymer and ethylene/1-butene/ 5-ethylidene-2-norbornene terpolymer, which has an ethylene unit content of 50 to 95 mole % based on the total of the propylene unit and the 1-butene unit and has a dicyclopentadiene or 5-ethylidene-2-norbornene unit content of 3 to 10 mole % based on the total of the ethylene unit and the propylene or 1-butene unit, and which further has a crystallinity of 20% or less as measured by an X-ray diffraction and a Mooney viscosity ($ML_{1+4}$100°C) of 10 to 500.

11. The thermoplastic elastomer composition according to Claim 1 or 2, wherein the ethylene/α-olefin copolymer rubber (A) is a copolymer rubber obtainable by polymerizing ethylene, an α-olefin and if necessary a non-conjugated diene in the presence of a catalyst composed of at least one solvent-soluble vanadium compound and at least one organoaluminum compound in a solvent.

12. The thermoplastic elastomer composition according to Claim 1 or 2, wherein the α-olefinic crystalline polymer (B) is a homopolymer of an α-olefin having 3 or more carbon atoms or a copolymer comprising a major amount of said α-olefin which homopolymer or copolymer has a crystallinity of 50% or more as measured by an X-ray diffraction.

13. The thermoplastic elastomer composition according to Claim 12, wherein the homopolymer and copolymer have a density of 0.90 to 0.94 g/$cm^3$.

14. The thermoplastic elastomer composition according to Claim 1 or 2, wherein the α-olefin of the α-olefinic crystalline polymer (B) is an α-olefin having 3 to 12 carbon atoms.

15. The thermoplastic elastomer composition according to Claim 14, wherein the α-olefin is a member selected from

the group consisting of propylene, 1-butene, 1-pentene, 3-methyl-1-butene, 1-hexene, 3-methyl-1-pentene, 4-methyl-1-pentene, 3-ethyl-1-pentene, 1-octene, 1-decene and 1-undecene.

**16.** The thermoplastic elastomer composition according to Claim 12, wherein the homopolymer and copolymer have a maximum peak temperature (Tm) as measured by a differential scanning calorimetry (DSC) of not less than 100°C, a melt flow rate (MFR) at a temperature of 230°C under a load of 2.16 Kg of 0.1 to 100 g/10 min and a melting point not lower than 100°C.

**17.** The thermoplastic elastomer composition according to Claim 1 or 2, wherein the α-olefinic non-crystalline polymer (C) having a melt-viscosity at 190°C of not more than 50,000 cps is a non-crystalline homopolymer of an α-olefin having 3 or more carbon atoms or a non-crystalline copolymer comprising a major amount of said α-olefin, said non-crystalline homopolymer and copolymer having a crystallinity of less than 50% as measured by an X-ray diffraction.

**18.** The thermoplastic elastomer composition according to Claim 17, wherein the non-crystalline homopolymer and copolymer have a density of 0.85 to 0.89 $g/cm^3$.

**19.** The thermoplastic elastomer composition according to Claim 17, wherein the non-crystalline homopolymer and copolymer have a number average molecular weight of 1,000 to 20,000.

**20.** The thermoplastic elastomer composition according to Claim 17, wherein the α-olefin having 3 or more carbon atoms of the non-crystalline homopolymer or copolymer is an α-olefin having 3 to 12 carbon atoms.

**21.** The thermoplastic elastomer composition according to Claim 20, wherein the α-olefin having 3 to 12 carbon atoms is selected from the group consisting of propylene, 1-butene, 1-pentene, 3-methyl-1-butene, 1-hexene, 3-methyl-1-pentene, 4-methyl-1-pentene, 3-ethyl-1-pentene, 1-octene, 1-decene and 1-undecene.

**22.** The thermoplastic elastomer composition according to Claim 17, wherein the non-crystalline homopolymer or non-crystalline copolymer is a member selected from the group consisting of atactic polypropylene, atactic poly-1-butene, a non-crystalline polymer comprising a major amount of propylene and a minor amount of other olefins, and a non-crystalline polymer comprising a major amount of 1-butene and a minor amount of other olefins.

**23.** The thermoplastic elastomer composition according to Claim 1 or 2, wherein the cross-linking agent (D) is a member selected from the group consisting of an organic peroxide, a phenol type cross-linking agent, sulfur, a sulfur compound, p-quinone, a p-quinonedioxime derivative, a bismaleimide, an epoxy compound, a silane compound and an amino resin.

**24.** The thermoplastic elastomer composition according to Claim 23, wherein the cross-linking agent (D) is an organic peroxide and the proportion of the organic peroxide blended is 0.05 to 1.5 parts by weight per 100 parts by weight of a total of the ethylene/α-olefin copolymer rubber (A), the α-olefinic crystalline polymer (B) and the α-olefinic non-crystalline polymer (C).

**25.** The thermoplastic elastomer composition according to Claim 23, wherein the cross-linking agent (D) is a phenol type cross-linking agent and the proportion of the phenol type cross-linking agent blended is 0.2 to 10 parts by weight per 100 parts by weight of a total of the ethylene/α-olefin copolymer rubber (A), the α-olefinic crystalline polymer (B) and the α-olefinic non-crystalline polymer (C).

**26.** A bonded article composed of one molded article of an olefinic vulcanized rubber strongly bonded to one molded article of a thermoplastic elastomer composition or two molded articles of an olefinic vulcanized rubber strongly bonded to each other through one molded article of a thermoplastic elastomer composition, said thermoplastic elastomer composition comprising (A) 20 to 80 parts by weight of an ethylene/a-olefin copolymer rubber, (B) 5 to 70 parts by weight of an α-olefinic crystalline polymer and (C) 1 to 50 parts by weight of an α-olefinic non-crystalline polymer having a melt viscosity at 190°C of not more than 50,000 cps said thermoplastic elastomer composition being obtainable by mixing the components (A), (B), (C), and (D) a cross-linking agent and subjecting the resulting mixture to dynamic heat-treatment at a temperature not lower than the melting point of the constituent (B), the conditions for the dynamic heat-treatment being such that the temperature is 120 - 350°C and the time is 20 seconds to 20 minutes.

**27.** A bonded article composed of one molded article of an olefinic thermoplastic elastomer strongly bonded to one molded article of a thermoplastic elastomer composition or two molded articles of an olefinic thermoplastic elastomer strongly bonded to each other through one molded article of a thermoplastic elastomer composition, said thermoplastic elastomer composition comprising (A) 20 to 80 parts by weight of an ethylene/α-olefin copolymer rubber, (B) 5 to 70 parts by weight of an α-olefinic crystalline polymer and (C) 1 to 50 parts by weight of an α-olefinic non-crystalline polymer having a melt viscosity at 190°C of not more than 50,000 cps, said thermoplastic elastomer composition being obtainable by mixing the components (A), (B), (C), and (D) a cross-linking agent and subjecting the resulting mixture to dynamic heat-treatment at a temperature not lower than the melting point of the constituent (B), the conditions for the dynamic heat-treatment being such that the temperature is 120 - 350°C and the time is 20 seconds to 20 minutes.

**Patentansprüche**

**1.** Thermoplastische Elastomerzusammensetzung, die durch die Zugabe eines Vernetzungsmittels (D) zu einer Mischung, die 20 bis 80 Gewichtsteile eines Ethylen/α-Olefin-Copolymerkautschuks (A), 5 bis 70 Gewichtsteile eines kristallinen α-Olefinpolymers (B) und 1 bis 50 Gewichtsteile eines nicht-kristallinen α-Olefinpolymers (C) mit einer Schmelzviskosität von nicht größer als 50.000 cps bei 190 °C umfaßt, unter der Bedingung, daß die Gesamtheit der Bestandteile (A), (B) und (C) 100 Gewichtsteile beträgt, und das Unterziehen der resultierenden Mischung einer dynamischen Wärmebehandlung bei einer Temperatur, die nicht tiefer als der Schmelzpunkt des Bestandteils (B) ist, erhalten werden kann, wobei die Bedingungen für die dynamische Wärmebehandlung so beschaffen sind, daß die Temperatur 120 bis 350 °C und die Dauer 20 Sekunden bis 20 Minuten beträgt.

**2.** Thermoplastische Elastomerzusammensetzung, die durch die Zugabe eines Vernetzungsmittels (D) zu einer Mischung, die 20 bis 80 Gewichtsteile eines Ethylen/α-Olefin-Copolymerkautschuks (A) und 5 bis 70 Gewichtsteile eines kristallinen α-Olefinpolymers (B) umfaßt, das Unterziehen der resultierenden Mischung einer dynamischen Wärmebehandlung bei einer Temperatur, die nicht tiefer als der Schmelzpunkt des Bestandteils (B) ist, wobei die Bedingungen für die dynamische Wärmebehandlung so beschaffen sind, daß die Temperatur 120 bis 350 °C und die Dauer 20 Sekunden bis 20 Minuten beträgt, die Zugabe von 1 bis 50 Gewichtsteilen eines nicht-kristallinen α-Olefinpolymers (C) mit einer Schmelzviskosität von nicht größer als 50.000 cps bei 190 °C, zu der resultierenden Zusammensetzung, unter der Bedingung, daß die Gesamtheit der Bestandteile (A), (B) und (C) 100 Gewichtsteile beträgt, und das anschließende Schmelzkneten der resultierenden Mischung erhalten werden kann.

**3.** Thermoplastische Elastomerzusammensetzung nach Anspruch 1 oder Anspruch 2, wobei der Ethylen/α-Olefin-Copolymerkautschuk (A) ein kautschukartiges Polymer ist, das Ethylen und ein α-Olefin mit 3 oder mehr Kohlenstoffatomen als wesentliche Bestandteile umfaßt.

**4.** Thermoplastische Elastomerzusammensetzung nach Anspruch 3, wobei das α-Olefin 3 bis 12 Kohlenstoffatome aufweist.

**5.** Thermoplastische Elastomerzusammensetzung nach Anspruch 4, wobei das α-Olefin mit den 3 bis 12 Kohlenstoffatomen ein Element ist, das aus der Gruppe ausgewählt ist, die aus Propylen, 1-Buten, 1-Penten, 3-Methyl-1-buten, 1-Hexen, 3-Methyl-1-penten, 4-Methyl-1-penten, 3-Ethyl-1-penten, 1-Octen, 1-Decen und 1-Undecen besteht.

**6.** Thermoplastische Elastomerzusammensetzung nach Anspruch 1 oder Anspruch 2, wobei der Ethylen/α-Olefin-Copolymerkautschuk (A) aus der Gruppe ausgewählt ist, die aus einem binären Ethylen/α-Olefin-Copolymer und einem ternären Ethylen/α-Olefin/nicht-konjugiertes Dien-Copolymer besteht.

**7.** Thermoplastische Elastomerzusammensetzung nach Anspruch 6, wobei der Ethylen/α-Olefin-Copolymerkautschuk (A) ein binäres Ethylen/α-Olefin-Copolymer ist, das aus der Gruppe ausgewählt ist, die aus einem binären Ethylen/Propylen-Copolymer und einem binären Ethylen/1-Buten-Copolymer besteht, und einen Gehalt an Ethyleneinheiten von 50 bis 95 Mol-%, wobei der Rest aus Propyleneinheiten oder 1-Buteneinheiten besteht, eine Kristallinität von 20% oder weniger, gemessen mittels Röntgendiffraktion, und eine Mooney-Viskosität ($ML_{1+4}$100 °C) von 10 bis 500 aufweist.

**8.** Thermoplastische Elastomerzusammensetzung nach Anspruch 6, wobei der Ethylen/α-Olefin-Copolymerkautschuk (A) ein ternäres Ethylen/α-Olefin/nicht-konjugiertes Dien-Copolymer ist.

9. Thermoplastische Elastomerzusammensetzung nach Anspruch 8, wobei das nicht-konjugierte Dien des ternären Ethylen/α-Olefin/nicht-konjugiertes Dien-Copolymers ein Element ist, das aus der Gruppe ausgewählt ist, die aus 1,4-Pentadien, 1,4-Hexadien, 1,5-Hexadien, 1,7-Octadien, 1,9-Decadien, 3,6-Dimethyl-1,7-octadien, 4,5-Dimethyl-1,7-octadien, 5-Methyl-1,8-nonadien, Dicyclopentadien, 5-Ethyliden-2-norbornen, 5-Vinyl-2-norbornen und 2,5-Norbornadien besteht.

10. Thermoplastische Elastomerzusammensetzung nach Anspruch 8, wobei das ternäre Ethylen/α-Olefin/nicht-konjugiertes Dien-Copolymer ein Terpolymer ist, das aus der Gruppe ausgewählt ist, die aus Ethylen/Propylen/Dicyclopentadien-Terpolymer, Ethylen/Propylen/5-Ethyliden-2-norbornen-Terpolymer, Ethylen/1-Buten/Dicyclopentadien-Terpolymer und Ethylen/1-Buten/5-Ethyliden-2-norbornen-Terpolymer besteht, und einen Gehalt an Ethyleneinheiten von 50 bis 95 Mol-%, bezogen auf die Gesamtheit der Propylen- und der 1-Buteneinheiten, und einen Gehalt an Dicyclopentadieneinheiten oder 5-Ethyliden-2-norborneneinheiten von 3 bis 10 Mol-%, bezogen auf die Gesamtheit der Ethylen- und der Propylen- oder 1-Buteneinheiten aufweist, und das ferner eine Kristallinität von 20% oder weniger, gemessen mittels Röntgendiffraktion, und eine Mooney-Viskosität ($ML_{1+4}$100 °C) von 10 bis 500 aufweist.

11. Thermoplastische Elastomerzusammensetzung nach Anspruch 1 oder Anspruch 2, wobei der Ethylen/α-Olefin-Copolymerkautschuk (A) ein Copolymerkautschuk ist, der durch die Polymerisierung von Ethylen, einem α-Olefin und, falls dies erforderlich ist, einem nicht konjugierten Dien in Anwesenheit eines Katalysators, der aus mindestens einer lösungsmittellöslichen Vanadiumverbindung und mindestens einer Organoaluminiumverbindung in einem Lösungsmittel besteht, erhältlich ist.

12. Thermoplastische Elastomerzusammensetzung nach Anspruch 1 oder Anspruch 2, wobei das kristalline α-Olefin-Polymer (B) ein Homopolymer eines α-Olefins mit 3 oder mehr Kohlenstoffatomen oder ein Copolymer ist, das als Hauptmenge das α-Olefin umfaßt, wobei das Homopolymer oder Copolymer eine mittels Röntgendiffraktion gemessene Kristallinität von 50% oder mehr aufweist.

13. Thermoplastische Elastomerzusammensetzung nach Anspruch 12, wobei das Homopolymer und das Copolymer eine Dichte von 0,90 bis 0,94 g/$cm^3$ aufweisen.

14. Thermoplastische Elastomerzusammensetzung nach Anspruch 1 oder Anspruch 2, wobei das α-Olefin des kristallinen α-Olefinpolymers (B) ein α-Olefin mit 3 bis 12 Kohlenstoffatomen ist.

15. Thermoplastische Elastomerzusammensetzung nach Anspruch 14, wobei das α-Olefin ein Element ist, das aus der Gruppe ausgewählt ist, die aus Propylen, 1-Buten, 1-Penten, 3-Methyl-1-buten, 1-Hexen, 3-Methyl-1-penten, 4-Methyl-1-penten, 3-Ethyl-1-penten, 1-Octen, 1-Decen und 1-Undecen besteht.

16. Thermoplastische Elastomerzusammensetzung nach Anspruch 12, wobei das Homopolymer und das Copolymer eine maximale Peak-Temperatur (Tm), wie sie mittels Differential-scanning-Kalorimetrie (DSK) gemessen wird, von nicht kleiner als 100 °C, eine Thermoplasten-Fließfähigkeit (melt flow rate - MFR) bei einer Temperatur von 230 °C unter einer Last von 2,16 kg von 0,1 bis 100 g/10 min und einen Schmelzpunkt von nicht tiefer als 100 °C aufweisen.

17. Thermoplastische Elastomerzusammensetzung nach Anspruch 1 oder Anspruch 2, wobei das nicht-kristallinen α-Olefin-polymer (C) mit einer Schmelzviskosität bei 190 °C von nicht größer als 50.000 cps ein nicht-kristallines Homopolymer eines α-Olefins mit 3 oder mehr Kohlenstoffatomen oder ein nicht-kristallines Copolymer ist, das als Hauptmenge das α-Olefin umfaßt, wobei das nicht-kristalline Homopolymer und das nicht-kristalline Copolymer eine mittels Röntgendiffraktion gemessene Kristallinität von kleiner 50% aufweisen.

18. Thermoplastische Elastomerzusammensetzung nach Anspruch 17, wobei das nicht-kristalline Homopolymer und das nichtkristalline Copolymer eine Dichte von 0,85 bis 0,89 g/$cm^3$ aufweisen.

19. Thermoplastische Elastomerzusammensetzung nach Anspruch 17, wobei das nicht-kristalline Homopolymer und das nichtkristalline Copolymer ein Zahlenmittel des Molekulargewichts von 1.000 bis 20.000 aufweisen.

20. Thermoplastische Elastomerzusammensetzung nach Anspruch 17, wobei das α-Olefin mit den 3 oder mehr Kohlenstoffatomen des nichtkristallinen Homopolymers oder des nichtkristallinen Copolymers ein α-Olefin mit 3 bis 12 Kohlenstoffatomen ist.

21. Thermoplastische Elastomerzusammensetzung nach Anspruch 20, wobei das α-Olefin mit den 3 bis 12 Kohlenstoffatomen aus der Gruppe ausgewählt ist, die aus Propylen, 1-Buten, 1-Penten, 3-Methyl-1-buten, 1-Hexen, 3-Methyl-1-penten, 4-Methyl-1-penten, 3-Ethyl-1-penten, 1-Octen, 1-Decen und 1-Undecen besteht.

22. Thermoplastische Elastomerzusammensetzung nach Anspruch 17, wobei das nicht-kristalline Homopolymer oder das nicht-kristalline Copolymer ein Element ist, das aus der Gruppe ausgewählt ist, die aus ataktischem Polypropylen, ataktischem Poly-1-buten, einem nicht-kristallinen Polymer, das als Hauptmenge Propylen und als kleineren Anteil andere Olefine umfaßt, und einem nicht-kristallinem Polymer, das als Hauptmenge 1-Buten und als kleineren Anteil andere Olefine umfaßt, besteht.

23. Thermoplastische Elastomerzusammensetzung nach Anspruch 1 oder Anspruch 2, wobei das Vernetzungsmittel (D) ein Element ist, das aus der Gruppe ausgewählt ist, die aus einem organischen Peroxid, einem Vernetzungsmittel vom Phenoltyp, Schwefel, einer Schwefelverbindung, p-Chinon, einem p-Chinondioximderivat, einem Bismaleimid, einer Epoxyverbindung, einer Silanverbindung und einem Aminharz besteht.

24. Thermoplastische Elastomerzusammensetzung nach Anspruch 23, wobei das Vernetzungsmittel (D) ein organisches Peroxid ist und der Anteil des zugemischten organischen Peroxids 0,05 bis 1,5 Gewichtsteile pro 100 Gewichtsteile der Gesamtheit aus dem Ethylen/α-Olefin-Copolymerkautschuk (A), dem kristallinen α-Olefinpolymer (B) und dem nicht-kristallinen α-Olefinpolymer (C) beträgt.

25. Thermoplastische Elastomerzusammensetzung nach Anspruch 23, wobei das Vernetzungsmittel (D) ein Vernetzungsmittel vom Phenoltyp ist und der Anteil des zugemischten Vernetzungsmittels vom Phenoltyp 0,2 bis 10 Gewichtsteile pro 100 Gewichtsteile der Gesamtheit aus dem Ethylen/α-Olefin-Copolymerkautschuk (A), dem kristallinen α-Olefinpolymer (B) und dem nicht-kristallinen α-Olefinpolymer (C) beträgt.

26. Verbundgegenstand, der aus einem Formteil aus einem olefinischen, vulkaniserten Kautschuk, der stark an ein Formteil aus einer thermoplastischen Elastomerzusammensetzung gebunden ist, oder aus zwei Formteilen aus einem olefinischem, vulkanisierten Kautschuk, die über ein Formteil aus einer thermoplastischen Elastomerzusammensetzung stark aneinander gebunden sind, besteht, wobei die thermoplastische Elastomerzusammensetzung 20 bis 80 Gewichtsteile eines Ethylen/a-Olefin-Copolymerkautschuks (A), 5 bis 70 Gewichtsteile eines kristallinen α-Olefinpolymers (B) und 1 bis 50 Gewichtsteile eines nicht-kristallinen α-Olefinpolymers (C) mit einer Schmelzviskosität von nicht größer als 50.000 cps bei 190 °C umfaßt, wobei die thermoplastische Elastomerzusammensetzung durch Mischen der Bestandteile (A), (B), (C) und eines Vernetzungsmittels (D) und einem Unterziehen der resultierenden Mischung einer dynamischen Wärmebehandlung bei einer Temperatur, die nicht tiefer als der Schmelzpunkt des Bestandteils (B) ist, erhalten werden kann, wobei die Bedingungen für die dynamische Wärmebehandlung so beschaffen sind, daß die Temperatur 120 bis 350 °C und die Dauer 20 Sekunden bis 20 Minuten beträgt.

27. Verbundgegenstand, der aus einem Formteil aus einem thermoplastischen Olefinelastomer, das stark an ein Formteil aus einer thermoplastischen Elastomerzusammensetzung gebunden ist, oder aus zwei Formteilen aus einem thermoplastischen Olefinelastomer, die über ein Formteil aus einer thermoplastischen Elastomerzusammensetzung stark aneinander gebunden sind, besteht, wobei die thermoplastische Elastomerzusammensetzung 20 bis 80 Gewichtsteile eines Ethylen/α-Olefin-Copolymerkautschuks (A), 5 bis 70 Gewichtsteile eines kristallinen α-Olefinpolymers (B) und 1 bis 50 Gewichtsteile eines nicht-kristallinen α-Olefinpolymers (C) mit einer Schmelzviskosität von nicht größer als 50.000 cps bei 190 °C umfaßt, wobei die thermoplastische Elastomerzusammensetzung durch Mischen der Bestandteile (A), (B), (C) und eines Vernetzungsmittels (D) und einem Unterziehen der resultierenden Mischung einer dynamischen Wärmebehandlung bei einer Temperatur, die nicht tiefer als der Schmelzpunkt des Bestandteils (B) ist, erhalten werden kann, wobei die Bedingungen für die dynamische Wärmebehandlung so beschaffen sind, daß die Temperatur 120 bis 350 °C und die Dauer 20 Sekunden bis 20 Minuten beträgt.

## Revendications

1. Composition élastomère thermoplastique pouvant être obtenue en ajoutant (D) un agent de réticulation à un mélange comprenant (A) 20 à 80 parties en poids d'un caoutchouc de copolymère éthylène/α-oléfine, (B) 5 à 70 parties en poids d'un polymère α-oléfinique cristallin et (C) 1 à 50 parties en poids d'un polymère α-oléfinique non cristallin ayant une viscosité à chaud non supérieure à 50 000 cp à 190°C, à condition que le total des constituants

(A), (B) et (C) soit égal à 100 parties en poids, et en soumettant le mélange résultant à un traitement thermique dynamique à une température non inférieure au point de fusion du constituant (B), dans lequel les conditions du traitement thermique dynamique sont telles que la température soit de 120 à 350°C et la durée de 20 secondes à 20 minutes.

**2.** Composition élastomère thermoplastique pouvant être obtenue en ajoutant (D) un agent de réticulation à un mélange comprenant (A) 20 à 80 parties en poids d'un caoutchouc de copolymère éthylène/α-oléfine et (B) 5 à 70 parties en poids d'un polymère α-oléfinique cristallin, en soumettant le mélange résultant à un traitement thermique dynamique à une température non inférieure au point de fusion du constituant (B), dans lequel les conditions du traitement thermique dynamique sont telles que la température soit de 120 à 350°C et la durée de 20 secondes à 20 minutes ; en ajoutant, à la composition résultante, (C) 1 à 50 parties en poids d'un polymère α-oléfinique non cristallin ayant une viscosité à chaud à 190°C non supérieure à 50 000 cp, à condition que le total des constituants (A), (B) et (C) soit égal à 100 parties en poids, et en pétrissant en fusion le mélange résultant.

**3.** Composition élastomère thermoplastique selon la revendication 1 ou 2, dans laquelle le caoutchouc de copolymère éthylène/α-oléfine (A) est un polymère caoutchouteux comprenant de l'éthylène et une α-oléfine comportant 3 atomes de carbone ou plus, en tant que constituants essentiels.

**4.** Composition élastomère thermoplastique selon la revendication 3, dans laquelle l'α-oléfine comporte 3 à 12 atomes de carbone.

**5.** Composition élastomère thermoplastique selon la revendication 4, dans laquelle l'α-oléfine comportant 3 à 12 atomes de carbone est un élément choisi dans le groupe constitué par le propylène, le 1-butène, le 1-pentène, le 3-méthyl-1-butène, le 1-hexène, le 3-méthyl-1-pentène, le 4-méthyl-1-pentène, le 3-éthyl-1-pentène, le 1-octène, le 1-décène et le 1-undécène.

**6.** Composition élastomère thermoplastique selon la revendication 1 ou 2, dans laquelle le caoutchouc de copolymère éthylène/α-oléfine (A) est choisi dans le groupe constitué par un copolymère binaire éthylène/α-oléfine et un copolymère ternaire éthylène/α-oléfine/diène non conjugué.

**7.** Composition élastomère thermoplastique selon la revendication 6, dans laquelle le caoutchouc de copolymère éthylène/α-oléfine (A) est un copolymère binaire éthylène/α-oléfine choisi dans le groupe constitué par le copolymère binaire éthylène/propylène et le copolymère binaire éthylène/1-butène, qui a une teneur en motif éthylène de 50 à 95% en moles, le complément étant un motif propylène ou un motif 1-butène, une cristallinité de 20% ou moins, mesurée par diffraction des rayons X et une viscosité Mooney ($ML_{1+4}$ 100°C) de 10 à 500.

**8.** Composition élastomère thermoplastique selon la revendication 6, dans laquelle le caoutchouc de copolymère éthylène/a-oléfine (A) est un copolymère ternaire éthylène/a-oléfine/diène non conjugué.

**9.** Composition élastomère thermoplastique selon la revendication 8, dans laquelle le diène non conjugué du copolymère ternaire éthylène/α-oléfine/diène non conjugué est un élément choisi dans le groupe constitué par le 1,4-pentadiène, le 1,4-hexadiène, le 1,5-hexadiène, le 1,7-octadiène, le 1,9-décadiène, le 3,6-diméthyl-1,7-octadiène, le 4,5-diméthyl-1,7-octadiène, le 5-méthyl-1,8-nonadiène, le dicyclopentadiène, le 5-éthylidène-2-norbornène, le 5-vinyl-2-norbornène et le 2,5-norbornadiène.

**10.** Composition élastomère thermoplastique selon la revendication 8, dans laquelle le copolymère ternaire éthylène/α-oléfine/diène non conjugué est un terpolymère choisi dans le groupe constitué par le terpolymère éthylène/propylène/dicyclopentadiène, le terpolymère éthylène/propylène/5-éthylidène-2-norbornène, le terpolymère éthylène/1-butène/dicyclopentadiène et le terpolymère éthylène/1-butène/5-éthylidène-2-norbornène, qui a une teneur en motif éthylène est de 50 à 95% en moles, par rapport au total du motif propylène et du motif 1-butène et a une teneur en motif dicyclopentadiène ou 5-éthylidène-2-norbornène de 3 à 10% en moles, par rapport au total du motif éthylène et du motif propylène ou 1-butène, et qui a en outre une cristallinité de 20% ou moins, mesurée par diffraction des rayons X, et une viscosité Mooney ($ML_{1+4}$ 100°C) de 10 à 500.

**11.** Composition élastomère thermoplastique selon la revendication 1 ou 2, dans laquelle le caoutchouc de copolymère éthylène/α-oléfine (A) est un caoutchouc de copolymère pouvant être obtenu par polymérisation d'éthylène, d'une α-oléfine et, le cas échéant, un diène non conjugué, en présence d'un catalyseur constitué d'au moins un composé vanadium soluble dans un solvant et d'au moins un composé organoaluminium dans un solvant.

**12.** Composition élastomère thermoplastique selon la revendication 1 ou 2, dans laquelle le polymère α-oléfinique cristallin (B) est un homopolymère d'une α-oléfine comportant 3 atomes de carbone ou plus ou un copolymère comprenant une quantité majeure de ladite α-oléfine, cet homopolymère ou ce copolymère ayant une cristallinité de 50% ou plus, mesurée par diffraction des rayons X.

**13.** Composition élastomère thermoplastique selon la revendication 12, dans laquelle l'homopolymère et le copolymère ont une masse volumique de 0,90 à 0,94 g/$cm^3$.

**14.** Composition élastomère thermoplastique selon la revendication 1 ou 2, dans laquelle l'α-oléfine du polymère α-oléfinique cristallin (B) est une α-oléfine comportant 3 à 12 atomes de carbone.

**15.** Composition élastomère thermoplastique selon la revendication 14, dans laquelle l'α-oléfine est un élément choisi dans le groupe constitué par le propylène, le 1-butène, le 1-pentène, le 3-méthyl-1-butène, le 1-hexène, le 3-méthyl-1-pentène, le 4-méthyl-1-pentène, le 3-éthyl-1-pentène, le 1-octène, le 1-décène et le 1-undécène.

**16.** Composition élastomère thermoplastique selon la revendication 12, dans laquelle l'homopolymère et le copolymère ont un pic de température maximum (Tm), mesuré par analyse calorimétrique différentielle (DSC), d'au moins 100°C, un indice de fluidité à chaud (MFR) à une température de 230°C sous une charge de 2,16 kg de 0,1 à 100 g/10 min, et un point de fusion non inférieur à 100°C.

**17.** Composition élastomère thermoplastique selon la revendication 1 ou 2, dans laquelle le polymère α-oléfinique non cristallin (C) ayant une viscosité à chaud à 190°C non supérieure à 50 000 cp est un homopolymère non cristallin d'une α-oléfine comportant 3 atomes de carbone ou plus ou un copolymère non cristallin comprenant une quantité majeure de ladite α-oléfine, ledit homopolymère et ledit copolymère non cristallins ayant une cristallinité inférieure à 50%, mesurée par diffraction des rayons X.

**18.** Composition élastomère thermoplastique selon la revendication 17, dans laquelle l'homopolymère et le copolymère non cristallins ont une masse volumique de 0,85 à 0,89 g/$cm^3$.

**19.** Composition élastomère thermoplastique selon la revendication 17, dans laquelle l'homopolymère et le copolymère non cristallins ont une masse moléculaire moyenne en nombre de 1 000 à 20 000.

**20.** Composition élastomère thermoplastique selon la revendication 17, dans laquelle l'α-oléfine comportant 3 atomes de carbone ou plus de l'homopolymère ou du copolymère non cristallin est une α-oléfine comportant 3 à 12 atomes de carbone.

**21.** Composition élastomère thermoplastique selon la revendication 20, dans laquelle l'α-oléfine comportant 3 à 12 atomes de carbone est choisie dans le groupe constitué par le propylène, le 1-butène, le 1-pentène, le 3-méthyl-1-butène, le 1-hexène, le 3-méthyl-1-pentène, le 4-méthyl-1-pentène, le 3-éthyl-1-pentène, le 1-octène, le 1-décène et le 1-undécène.

**22.** Composition élastomère thermoplastique selon la revendication 17, dans laquelle l'homopolymère non cristallin ou le copolymère non cristallin est un élément choisi dans le groupe constitué par le polypropylène atactique, le poly(1-butène) atactique, un polymère non cristallin comprenant une quantité majeure de propylène et une quantité mineure d'autres oléfines et un polymère non cristallin comprenant une quantité majeure de 1-butène et une quantité mineure d'autres oléfines.

**23.** Composition élastomère thermoplastique selon la revendication 1 ou 2, dans laquelle l'agent de réticulation (D) est un élément choisi dans le groupe constitué par un peroxyde organique, un agent de réticulation de type phénol, le soufre, un composé soufré, la p-quinone, un dérivé du p-quinonedioxime, un bismaléimide, un composé époxy, un composé silane et une résine amino.

**24.** Composition élastomère thermoplastique selon la revendication 23, dans laquelle l'agent de réticulation (D) est un peroxyde organique et la proportion du peroxyde organique mélangé est de 0,05 à 1,5 parties en poids, pour 100 parties en poids du total du caoutchouc de copolymère éthylène/α-oléfine (A), du polymère α-oléfinique cristallin (B) et du polymère α-oléfinique non cristallin (C).

**25.** Composition élastomère thermoplastique selon la revendication 23, dans laquelle l'agent de réticulation (D) est

un agent de réticulation de type phénol et la proportion de l'agent de réticulation de type phénol mélangé est de 0,2 à 10 parties en poids, pour 100 parties en poids du total du caoutchouc de copolymère éthylène/α-oléfine (A), du polymère α-oléfinique cristallin (B) et du polymère α-oléfinique non cristallin (C).

**26.** Article lié constitué d'un article moulé à base d'un caoutchouc oléfinique vulcanisé fortement lié à un article moulé à base d'une composition élastomère thermoplastique ou à deux articles moulés à base d'un caoutchouc oléfinique vulcanisé fortement liés l'un à l'autre par l'intermédiaire d'un article moulé à base d'une composition élastomère thermoplastique, ladite composition élastomère thermoplastique comprenant (A) 20 à 80 parties en poids d'un caoutchouc de copolymère éthylène/α-oléfine, (B) 5 à 70 parties en poids d'un polymère α-oléfinique cristallin et (C) 1 à 50 parties en poids d'un polymère α-oléfinique non cristallin ayant une viscosité à chaud non supérieure à 50 000 cp à 190°C, ladite composition élastomère thermoplastique pouvant être obtenue en mélangeant les constituants (A), (B), (C) et (D) un agent de réticulation et en soumettant le mélange résultant à un traitement thermique dynamique à une température non inférieure au point de fusion du constituant (B), les conditions du traitement thermique dynamique étant telles que la température soit de 120 à 350°C et la durée de 20 secondes à 20 minutes.

**27.** Article lié constitué d'un article moulé à base d'un élastomère oléfinique thermoplastique fortement lié à un article moulé à base d'une composition élastomère thermoplastique ou à deux articles moulés à base d'un élastomère oléfinique thermoplastique fortement liés l'un à l'autre par l'intermédiaire d'un article moulé à base d'une composition élastomère thermoplastique, ladite composition élastomère thermoplastique comprenant (A) 20 à 80 parties en poids d'un caoutchouc de copolymère éthylène/α-oléfine, (B) 5 à 70 parties en poids d'un polymère α-oléfinique cristallin et (C) 1 à 50 parties en poids d'un polymère α-oléfinique non cristallin ayant une viscosité à chaud non supérieure à 50 000 cp à 190°C, ladite composition élastomère thermoplastique pouvant être obtenue en mélangeant les constituants (A), (B), (C) et (D) un agent de réticulation et en soumettant le mélange résultant à un traitement thermique dynamique à une température non inférieure au point de fusion du constituant (B), les conditions du traitement thermique dynamique étant telles que la température soit de 120 à 350°C et la durée de 20 secondes à 20 minutes.